# EUROPÄISCHE PATENTSCHRIFT

(11) **EP 3 183 129 B1**
(45) Veröffentlichungstag und Bekanntmachung des Hinweises auf die Patenterteilung: **02.05.2018**
(21) Anmeldenummer: 15756836.1
(22) Anmeldetag: 21.08.2015
(51) Int. Cl.: B60G 17/052, B60T 17/02, B60T 17/00, F15B 21/00, F15B 21/04, F04B 49/06

(54) **PNEUMATIKSCHALTUNG FÜR PKW-LUFTFEDERUNGSSYSTEM**
PNEUMATIC CIRCUIT FOR PASSENGER CAR PNEUMATIC SUSPENSION SYSTEM
CIRCUIT PNEUMATIQUE POUR SYSTÈME DE SUSPENSION PNEUMATIQUE DE VOITURE

(30) Priorität: 22.08.2014 DE 102014012680; 22.08.2014 DE 102014012609
(43) Veröffentlichungstag der Anmeldung: 28.06.2017
(73) Patentinhaber: WABCO GmbH, 30453 Hannover (DE)
(72) Erfinder: BODET, Marc-Michel, 31515 Wunstorf (DE); MEISSNER, Frank, 30453 Hannover (DE)
(74) Vertreter: Lauerwald, Jörg
(86) Internationale Anmeldenummer: PCT/EP2015/001716
(87) Internationale Veröffentlichungsnummer: WO 2016/026577

(56) Entgegenhaltungen:
- EP-A1- 0 978 397
- WO-A1-01/56820
- WO-A1-2012/079688
- DE-A1- 3 542 974
- DE-A1- 3 919 438
- DE-A1-102010 054 704
- DE-A1-102011 109 500
- DE-A1-102012 005 303
- DE-A1-102012 006 382
- DE-C1- 19 724 747

## Beschreibung

Die Erfindung betrifft eine Druckluftversorgungsanlage zum Betreiben eines pneumatischen Systems gemäß Anspruch 1, ein Druckluftversorgungssystem nach Anspruch 20, ein Verfahren zum Betreiben eines Druckluftversorgungssystems nach Anspruch 21 und ein Fahrzeug nach Anspruch 23.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt wird. Eine Luftfederanlage eines pneumatischen Systems umfasst eine Anzahl von an einer gemeinsamen Leitung (Galerie) pneumatisch angeschlossenen Luftbalgen, die mit zunehmender Befüllung den Fahrzeugaufbau anheben und entsprechend mit abnehmender Befüllung absenken. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Vorzugsweise werden solche Systeme zunehmend in Geländefahrzeugen und Sport Utility Vehicles (SUV) eingesetzt.

Insbesondere bei SUVs ist es bei leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht.

Um einen langfristigen Betrieb der Druckluftversorgungsanlage sicherzustellen weist eine Pneumatikhauptleitung der Druckluftversorgungsanlage einen Lufttrockner auf, mit dem die Druckluft getrocknet wird. Hierdurch wird eine Ansammlung von Feuchtigkeit im Pneumatiksystem vermieden. Feuchtigkeit kann bei vergleichsweise niedrigen Temperaturen zu ventilschädigender Kristallbildung führen und darüber hinaus zu ungewünschten Defekten in der Druckluftversorgungsanlage und in der Pneumatikanlage. Ein Lufttrockner weist ein Trockenmittel auf, üblicherweise eine Granulatschüttung, welche von der Druckluft durchströmbar ist, so dass die Granulatschüttung in der Druckluft enthaltene Feuchtigkeit durch Adsorption aufnehmen kann. Ein Lufttrockner kann gegebenenfalls als regenerativer Lufttrockner ausgelegt werden. Dies kann dadurch geschehen, dass die Granulatschüttung bei jedem Entlüftungszyklus mit der getrockneten Druckluft aus der Pneumatikanlage, insbesondere einer Luftfederanlage - meist im Gegenstrom, Gleichstrom jedoch teilweise auch relativ zur Befüllrichtung - durchströmt wird. Eine Regeneration des Lufttrockners wird im Wesentlichen durch einen Druckwechsel am Lufttrockner ermöglicht, wobei ein im Vergleich zur Adsorption bei der Regeneration vorliegender Druck regelmäßig geringer ist, um eine Feuchtigkeitsabgabe aus dem Granulat zu ermöglichen. Dazu kann die Entlüftungsventilanordnung geöffnet werden, wobei die Regenerationsfähigkeit des Lufttrockners regelmäßig von den Druckverhältnissen und der Druckwechselamplitude in der Druckluftversorgungsanlage abhängig ist. Auch für eine solche sogenannte Druckwechseladsorption hat es sich als wünschenswert erwiesen, eine Druckluftversorgungsanlage flexibel und gleichzeitig verlässlich auszulegen. Insbesondere soll einerseits eine vergleichsweise schnelle Entlüftung ermöglicht werden und dennoch ein für eine Regeneration des Lufttrockners ausreichend hohe Druckwechselamplitude niedriger Luftdruck - d. h. bei Regeneration - zur Verfügung stehen.

Aus dem Stand der Technik sind verschiedenste Ansätze bekannt, eine erste pneumatische Verbindung zwischen einer eingangs genannten Druckluftzuführung und einer eingangs genannten Pneumatikanlage auszulegen. Diese berücksichtigen die Grundfunktionen einer Druckluftversorgungsanlage beim Belüften der Pneumatikanlage und Entlüften der Pneumatikanlage. Hinsichtlich des oben genannten Bedarfs einer vergleichsweise schnellen Entlüftung mit dennoch für eine Regeneration des Lufttrockners ausreichend niedrigem und/oder maximalem Luftdruck bzw. Druckwechselamplitude sind diese jedoch noch verbesserungswürdig.

Aus DE 35 42 974 A1 der Anmelderin ist eine mit Luftfiltern versehene Niveauregeleinrichtung für Fahrzeuge bekannt, mit der in Abhängigkeit von der Fahrzeugbelastung ein vorgegebener Abstand der Fahrzeugzelle von der Fahrzeugachse durch Auffüllen oder Entleeren der Luftfedern eingestellt werden kann. Die Einrichtung hat ein mit dem Druck in den Luftfedern steuerbares Sicherheitsventil. Eine Regeneration des Lufttrockners ist bei einer solchen Anlage über eine Drossel und ein gegen eine Befüllrichtung zu öffnendes Rückschlagventil möglich. Die Druckluftversorgungsanlage der DE 35 42 974 A1 hat sich seit langem bewährt, ist jedoch noch verbesserbar. Es hat sich gezeigt, dass die Anlage zwar vorteilhaft geeignet ist, auch bei einer Regeneration des Lufttrockners durch die Abtrennung von Druckluftversorgungsanlage und Pneumatikanlage mit dem ersten Rückschlagventil Druckluft zu sparen. Gleichwohl hat sich insbesondere für fortschrittliche Anwendungen, welche eine vergleichsweise flexible und schnelle Drucklufthandhabung in vergleichsweise kurzen Zeiträumen erforderlich machen, die in DE 35 42 974 A1 offenbarte Anlage der Anmelderin als begrenzt in ihren Möglichkeiten erwiesen.

Weitere relevante Druckluftversorgungsanlage sind aus der WO 01/56820 A und DE 3919 438 A bekannt.

Bekannte Druckluftversorgungsanlagen lassen sich noch verbessern insbesondere hinsichtlich Energiebedarf und/oder Akustik.
Insbesondere zeigt sich, dass Nennweiten einer Drossel unter Berücksichtigung von Regenerationsaspekten des Lufttrockners begrenzt sind, was Auswirkungen auf den Luftdurchsatz der Druckluftversorgungsanlage und damit die Flexibilität derselben hat. Andererseits hat eine bloße Nennweitenanpassung verschiedenste Auswirkungen auf Energiebedarf und Akustik einer Druckluftversorgungsanlage.
DE 10 2010 054 704 A1 beschreibt eine Druckluftversorgungsanlage zum Betreiben einer Pneumatikanlage mit einer Luftzuführung und einem Luftverdichter zur Versorgung einer Druckluftzuführung mit Druckluft. Eine Entlüftungsleitung hat eine Entlüftungsventilanordnung und einen Entlüftungsanschluss zum Ablassen von Luft und eine Druckluftversorgungsleitung hat einen Lufttrockner und einen Druckluftanschluss zur Versorgung der Pneumatikanlage mit Druckluft, wobei der Lufttrockner einen ein Trockenmittel enthaltenden von Druckluft durchströmbaren Trockenbehälter aufweist. Die Druckluftversorgungsanlage sieht eine Magnetventilanordnung als direkt gesteuerte Entlüftungs-Magnetventilanordnung vor, mit der durch Ansteuerung über eine Steuerleitung eine direkte Schaltung des gesamten Druckluftvolumens möglich ist. Das einzige Ventil der Magnetventilanordnung erlaubt eine schnelle und flexible Entlüftung der Pneumatikanlage bzw. der Druckluftversorgungsanlage, ohne dass ein zusätzliches Steuerventil nötig wäre. Damit lässt sich vor allem eine baumraumsparende Druckluftversorgungsanlage realisieren; hinsichtlich einer vorteilhaften Basis für eine verbesserte Akustik und/oder einer Regeneration eines Lufttrockners ist dieses Konzept jedoch noch besonders verbesserungswürdig.

Zwar lässt sich bei einer Druckluftversorgungsanlage eine Galerie der Pneumatikanlage gegen die Druckluftversorgungsanlage sperren; dadurch kann eine Beschaltung einer Magnetventilblockkomponente in der Pneumatikanlage erfolgen, ohne dass das Volumen des Lufttrockners mit befüllt wird. Gleichwohl lässt sich der Aufbau auch einer solchen Druckluftversorgungsanlage noch verbessern.

DE 10 2011 109 500 A1 offenbart eine an sich besonders vorteilhafte Druckluftversorgungsanlage, bei welcher ein Trennventil in einer Pneumatikhauptleitung als eine pneumatisch entsperrbares Rückschlagventil gebildet ist. In einer Weiterbildung kann ein Doppelrelaiskolben vorgesehen sein, der derart druckbeaufschlagbar ist, dass das Rückschlagventil entsperrbar und gleichzeitig ein Entlüftungsventil betätigbar ist.

Wünschenswert ist es, eine Druckluftversorgungsanlage flexibel hinsichtlich ihrer Schalttätigkeit und dabei gleichwohl energiesparend mit hoher Regelgüte und/oder verminderter Akustik auszulegen.

An dieser Stelle setzt die Erfindung an, deren Aufgabe es ist, eine Druckluftversorgungsanlage und ein Verfahren zum Betreiben einer Pneumatikanlage anzugeben, die hinsichtlich des Standes der Technik verbessert ist, wenigstens aber eines der oben beschriebenen Probleme zu adressieren. Insbesondere soll eine Vorrichtung und ein Verfahren angegeben werden, mittels dem eine verbesserte Akustik erreichbar ist. Zumindest soll eine alternative Lösung zu einer im Stand der Technik bekannten Lösung vorgeschlagen werden.

Vorzugsweise sollte zudem eine verlässliche und dennoch flexible, gegebenenfalls schnelle Funktionsweise vorgesehen sein, wobei die Druckluftversorgungsanlage sowie das Verfahren zum Betreiben der Druckluftversorgungsanlage in besonderes vereinfachter Weise ausgebildet sind.

Diese Aufgabe wird erfindungsgemäß durch die Druckluftversorgungsanlage zum Betreiben eines pneumatischen Systems nach dem unabhängigen Anspruch 1, das Druckluftversorgungssystem nach Anspruch 20, das Verfahren zum Betreiben eines Druckluftversorgungssystems nach Anspruch 21 und das Fahrzeug nach Anspruch 23 gelöst.

Die Erfindung umfasst eine Druckluftversorgungsanlage nach Anspruch 1. Die erfindungsgemäße Druckluftversorgungsanlage zum Betreiben eines pneumatischen Systems weist auf:
- eine Druckluftzuführung, einen Druckluftanschluss zu einer Pneumatikanlage und einen Entlüftungsanschluss oder einen weiteren Entlüftungsanschluss zur Umgebung, wobei:
   - zwischen der Druckluftzuführung und dem Druckluftanschluss eine Pneumatikhauptleitung;
   - zwischen dem Druckluftanschluss und dem Entlüftungsanschluss eine Entlüftungsleitung mit einem über einen ersten und einen zweiten Entlüftungsventilanschluss angeschlossenen Entlüftungsventil gebildet ist, wobei
   - das Entlüftungsventil zusätzlich einen Steueranschluss aufweist, der mittels einer pneumatischen Steuerrelaisleitung in pneumatischer Verbindung mit einem Steuerventil verbunden ist, und
   - das Entlüftungsventil
   - in einem ersten Schaltzustand des Entlüftungsventils zwischen dem ersten Entlüftungsventilanschluss und dem zweiten Entlüftungsventilanschluss zum Entlüftungsanschluss geschlossen ist; und
   - in einem zweiten Schaltzustand des Entlüftungsventils zwischen dem ersten Entlüftungsventilanschluss und dem zweiten Entlüftungsventilanschluss zum Entlüftungsanschluss geöffnet ist, und
   - das Steuerventil
   - in einem ersten Schaltzustand zwischen einem Steuerdrucknehmeranschluss und einem Steuerdruckgeberanschluss zum Steueranschluss geschlossen ist; und
   - in einem zweiten Schaltzustand zwischen dem Steuerdrucknehmeranschluss und dem Steuerdruckgeberanschluss zum Steueranschluss geöffnet ist, um den Steueranschluss des Entlüftungsventils mit Druck zu beaufschlagen und das Entlüftungsventil von den ersten oder zweiten Schaltzustand des Entlüftungsventils in den jeweils anderen Schaltzustand des Entlüftungsventils zu überführen; und
   - das Steuerventil in Form eines 2/2-Wegeventils gebildet ist, wobei
   - die pneumatische Steuerrelaisleitung mittels einer Zusatzentlüftungsleitung in dem ersten und/oder zweiten Schaltzustand des Entlüftungsventils mit dem Entlüftungsanschluss und/oder einen weiteren Entlüftungsanschluss verbunden ist.

Weiter umfasst die Erfindung ein Druckluftversorgungssystem des Anspruchs 21. Das erfindungsgemäße Druckluftversorgungssystem weist eine erfindungsgemäße Druckluftversorgungsanlage und eine Pneumatikanlage auf, insbesondere einer Luftfederanlage eines Fahrzeuges, vorzugsweise eines Personenkraftfahrzeuges, insbesondere aufweisend eine Galerie, die wenigstens eine an die Galerie pneumatisch angeschlossene Zweigleitung mit einem Balg und/oder einem Speicher sowie einem dem Balg und/oder dem Speicher vorgeordnetem Wegeventil.

Darüber hinaus umfasst die Erfindung ein Verfahren zum Betreiben der erfindungsgemäßen Druckluftversorgungssystems nach Anspruch 22. Das erfindungsgemäße Verfahren umfasst folgende Schritte:
- Belüften der Pneumatikanlage, wobei das 2/2-Wege-Steuerventil in den ersten Schaltzustand geschaltet ist, der zwischen dem Steuerdrucknehmeranschluss und dem Steuerdruckgeberanschluss zum Steueranschluss geschlossen ist, um die Steuerrelaisleitung von dem Druck in der Pneumatikhauptleitung zu trennen; und
- Entlüften der Pneumatikanlage, wobei das 2/2-Wegeventil in den zweiten Schaltzustand geschaltet ist, der zwischen dem Steuerdrucknehmeranschluss und dem Steuerdruckgeberanschluss zum Steueranschluss des Entlüftungsventils geöffnet ist, um die Steuerrelaisleitung mit Druck zu beaufschlagen,
- wobei die Steuerrelaisleitung im ersten und/oder zweiten Schaltzustand des Steuerventils über eine Zusatzentlüftungsleitung mit dem Entlüftungsanschluss und/oder dem weiteren Entlüftungsanschluss in Verbindung steht.

Weiterhin umfasst die Erfindung ein Fahrzeug des Anspruchs 24, vorzugsweise ein Nutzfahrzeug, mit einem erfindungsgemäßen Druckluftversorgungssystem.

Die Erfindung geht von der Überlegung aus, dass beim Entlüften eines unter hohem Druck stehenden Volumens, z. B. eines Lufttrockners oder einer Pneumatikanlage eine hohe akustische Belastung der Umwelt, in Form eines Entlüftungsknalls oder dergleichen, entsteht aufgrund eines zu schnellen Druckabfalls. Tatsächlich sind gemäß der Erkenntnis der Erfindung vor allem ein zu schneller Druckabfall und/oder eine hohe Ausgangsdruckamplitude die Ursache für einen hohen Geräuschpegel. Weiter geht die Erfindung von der Überlegung aus, dass die Geräuschpegel beeinflussenden Faktoren wiederum wesentlich von den konstruktiven Gegebenheiten und Auslegungen in erster Linie des Entlüftungsventils beeinflusst sind.

Die Erfindung schlägt ein Konzept basierend auf einer den Steuerdruck aufgreifenden pneumatischen Regelung des Entlüftungsventils vor. Dieses Konzept ist in einigen Aspekten besser, jedenfalls aber als Alternative in einigen Aspekten geeignet, da jedenfalls die Steuergröße abhängig von der zu entlüftenden Druckgröße gemacht wird. Die Erfindung hat auch erkannt, dass ein Steuerdruck nicht nur zur pneumatischen Steuerung des Entlüftungsventils genutzt werden kann, sondern darüber hinaus mit Vorteil zu nutzen ist, um die initiale Entlüftungsphase des Entlüftungsventils zu verlängern, damit eine explosionsartige und einen Entlüftungsknall verursachende Anfangsentlüftung vermieden wird.

Ausgehend von dieser Erkenntnis sieht das Konzept der Erfindung vor, dass mittels einer Zusatzentlüftungsleitung, bevorzugt mittels einer gedrosselten Zusatzentlüftungsleitung, die Steuerrelaisleitung, die sowohl in einem ersten als auch in einem zweiten Schaltzustand des Entlüftungs- und/oder des Steuerventils, mit einem Entlüftungsanschluss und/oder einen weiteren Entlüftungsanschluss pneumatisch zu verbinden.

Weitere bevorzugte Weiterbildungen der Erfindung sind Gegenstand der Unteransprüche und präzisieren sowohl die Vorrichtung also auch das Verfahren und Fahrzeug. Insbesondere sind bevorzugte Weiterbildungen Gegenstand der Unteransprüchen und geben im Einzelnen vorteilhafte Möglichkeiten an, wie die/das oben erläuterte Vorrichtung/Verfahren im Rahmen der Aufgabenstellung sowie hinsichtlich weiterer Vorteile zu realisieren bzw. auszugestallten ist.

Bevorzugt sieht eine Weiterbildung der Luftversorgungsanlage vor, dass in der Zusatzentlüftungsleitung eine Zusatzdrossel angeordnet ist. Bei dieser Weiterbildung ist eine zusätzliche Drossel bzw. ein zusätzliches Drosselventil als eine lokale Verengung in der Zusatzentlüftungsleitung vorgesehen, insbesondere eine lokale Verengung des Strömungsquerschnittes der Zusatzentlüftungsleitung. Hierdurch wird der Druck der durchfließenden Druckluft vermindert. In einer noch mehr bevorzugten Ausgestaltung kann die zusätzliche Drossel als eine steuer- oder regelbare Drossel ausgebildet sein.

Bei einer zweckmäßigen Ausgestaltung der Druckluftversorgungsanlage kann vorgesehen sein, dass die Zusatzdrossel einen Durchmesser von kleiner gleich einem Millimeter und größer null Millimeter aufweist. Hierbei ist die Zusatzdrossel als eine geregelte oder ungeregelte Drossel ausgebildet und weist eine lokale Verengung mit einem maximalen Durchmesser von 1 Millimeter auf. Bevorzugt ist es hierbei dann vorgesehen, dass die Zusatzdrossel einen Durchmesser aufweist, der kleiner als der einer ersten Drossel ist, welche in der Pneumatikhauptleitung angeordnet ist, und über welche die Druckluftversorgungsanlage - bei geöffnetem Entlüftungsventil - entlüftet wird. Beispielsweise kann es sein, das die Zusatzdrossel einen Durchmesser von 0.9mm und die erste Drossel in der Pneumatikhauptleitung einen Durchmesser von 1.2mm aufweist.

Eine bevorzugte Weiterbildung der Druckluftversorgungsanlage sieht vor, dass die Zusatzentlüftungsleitung mit einem Teilabschnitt der Entlüftungsleitung zwischen dem zweiten Entlüftungsventilanschluss und dem Entlüftungsanschluss und/oder dem weiterem Entlüftungsanschluss pneumatisch verbunden ist. Bei dieser vorteilhaften Ausgestaltung der Druckluftversorgungsanlage ist es insbesondere vorgesehen, dass die Zusatzentlüftungsleitung unabhängig vom Schaltzustand des Entlüftungsventiles mit dem Entlüftungsanschluss und/oder dem weiteren Entlüftungsanschluss pneumatisch verbunden ist. Die Zusatzentlüftungsleitung ist also immer mit dem Entlüftungsanschluss und/oder dem weiteren Entlüftungsanschluss pneumatisch verbunden, das heißt durchströmbar oder offen, sodass unabhängig vom Schaltzustand des Entlüftungsventiles die Zusatzentlüftungsleitung und die - mit der Zusatzentlüftungsleitung pneumatisch in Verbindung stehende - Steuerrelaisleitung, entlüftet werden können, auch wenn das Entlüftungsventil geschlossen ist. Dies ist insbesondere nach einem Entlüftungsvorgang der Pneumatikanlage wichtig, da sonst die Druckluft/der Druck aus der Steuerrelaisleitung nicht abgeführt werden kann.

Eine bevorzugte Weiterbildung der Druckluftversorgungsanlage sieht vor, dass die pneumatische Steuerrelaisleitung zwischen dem Steuerdruckgeberanschluss des Steuerventils und dem Steueranschluss des Entlüftungsventiles als eine steuerdruckbeaufschlagbare pneumatische Steuerrelaisleitung gebildet ist, insbesondere als eine Relaiskolbensteuerleitung für einen Relaiskolben des Entlüftungsventiles. Hierbei umfasst das Entlüftungsventil einem Relaiskolben, welcher unter Beaufschlagung mit einem Steuerdruck über die Steuerrelaisleitung das Entlüftungsventil von einer - durch eine Ventilfeder gehaltenen - ersten geschlossenen Ventilstellung bei Druckbeaufschlagung in eine - durch den Steuerdruck aktuierte - zweite Ventilstellung gegen die Federkraft der Ventilfeder überführt. Hierfür wird das Steuerventil vom ersten Schaltzustand in den zweiten Schaltzustand überführt, sodass die Steuerrelaisleitung mit (Steuer-)Druck beaufschlagt wird und das Entlüftungsventil - wie oben beschrieben - geöffnet wird.

Eine Weiterbildung der Druckluftversorgungsanlage kann vorsehen, dass die Zusatzentlüftungsleitung als eine Aussparung im Relaiskolben oder im Entlüftungsventilgehäuse des Entlüftungsventiles gebildet ist. Bei dieser Ausgestaltung ist im Relaiskolben oder im Entlüftungsventilgehäuse des Entlüftungsventiles eine Aussparung vorgesehen, durch welche die Druckluft zum Entlüftungsanschluss und/oder dem weiteren Entlüftungsanschluss strömen oder abfließen kann. Eine derart ausgebildete Zusatzentlüftungsleitung ist konstruktiv besonders einfach umzusetzen und bedarf nur geringer Eingriffe in ein bestehendes System, insbesondere in eine bestehende Druckluftversorgungsanlage.

Bevorzugt sieht eine Ausgestaltung der Druckluftversorgungsanlage vor, dass die Aussparung als eine Bohrung in dem Relaiskolben des Entlüftungsventiles ausgebildet ist. Hierbei wird die Aussparung, welche die Zusatzentlüftungsleitung bildet, in Form einer Bohrung im Relaiskolben des Entlüftungsventiles gebildet. Diese Weiterbildung kann konstruktiv in besonders einfacher Weise umgesetzt werden.

Eine bevorzugte Weiterbildung betrifft eine Druckluftversorgungsanlage, bei welcher eine Dichtung vorgesehen ist, welche die Aussparung oder die Bohrung im ersten oder zweiten Schaltzustand des Entlüftungsventiles abdichtet und verschließt. Bei dieser Weiterbildung wird die Zusatzentlüftungsleitung dichtend verschlossen, solange sich der Relaiskolben im ersten oder zweiten Schaltzustand des Entlüftungsventiles befindet, bei welchem das Entlüftungsventil zum Entlüften der Pneumatikanlage geöffnet ist. Hierbei verschließt die Dichtung - durch die Verlagerung des Relaiskolbens - einen Eingang der Zusatzentlüftungsleitung. Nach dem Überführen des Entlüftungsventiles (zurück) in den geschlossenen Schaltzustand, insbesondere durch eine Verlagern des Relaiskolbens in die geschlossen Stellung, wird die Zusatzentlüftungsleitung wieder geöffnet, sodass auch die Zusatzentlüftungsleitung selbst und die pneumatisch in Verbindung stehende Steuerrelaisleitung entlüftet werden können.

Eine vorteilhafte Weiterbildung betrifft eine Druckluftversorgungsanlage, bei welcher die Aussparung als ein Schlitz in dem Entlüftungsventilgehäuse des Entlüftungsventiles gebildet ist, wobei der Schlitz insbesondere über einen Teilbereich des Ventilhubes des Relaiskolbens des Entlüftungsventiles gebildet ist.

Eine besonders vorteilhafte Weiterbildung betrifft eine Druckluftversorgungsanlage, bei welcher das Steuerventil als ein Magnetsteuerventil gebildet ist. Hierbei ist das Steuerventil bevorzugt als ein Ventil gebildet, welches mittels eines Elektromagneten betätigt werden kann. Hierbei ist in besonderes bevorzugter Weise vorgesehen, das Steuerventil mit einem über eine elektrische Steuerleitung übermittelten Steuersignal anzusteuern, beispielsweise in Form eines Spannungs- und/oder Stromsignales an eine Spule (Elektromagnet) des Steuerventiles, sodass das Steuerventil vom ersten Schaltzustand, der zwischen dem Steuerdrucknehmeranschluss und dem Steuerdruckgeberanschluss geschlossen ist, in den zweiten Schaltzustand, der zwischen dem Steuerdrucknehmeranschluss und dem Steuerdruckgeberanschluss geöffnet ist, zu überführen.

Bevorzugt sieht eine Weiterbildung der Druckluftversorgungsanlage vor, dass der erste Schaltzustand des Steuerventiles ein unbestromter Schaltzustand und der zweite Schaltzustand ein bestromter Schaltzustand ist. Ohne Einschränkung kann aber auch der erste Schaltzustand des Steuerventiles ein bestromter und der zweite Schaltzustand des Steuerventiles ein unbestromter Schaltzustand sein.

Im Rahmen einer bevorzugten Variante von Weiterbildungen ist vorgesehen, dass die Zusatzentlüftungsleitung als eine Rückkoppel-Leitung ausgebildet ist, wobei die Rückkoppel-Leitung an die pneumatische Steuerrelaisleitung und einen zweiten Steueranschluss des Entlüftungsventils anschließt.

Gemäß der Variante ist insbesondere vorgesehen, dass bei einem Entlüftungsanschluss des Entlüftungsventils, der mit dem zweiten Steueranschluss pneumatisch verbunden ist, eine noch weitere Entlüftungsleitung anschließt, die mit dem Entlüftungsanschluss und/oder dem weiteren Entlüftungsanschluss pneumatisch verbunden ist.

Besonders bevorzugt ist bei der Variante von Weiterbildungen vorgesehen, dass der zweite Steueranschluss zur Aufnahme eines zweiten Steuerteildrucks ausgebildet ist, der zusätzlich zu einem ersten Steuerteildruck des ersten Steueranschlusses wirkt.

Insbesondere ist im Rahmen einer Weiterbildung der Variante vorgesehen, dass der zweite Steueranschluss als ein Gegensteueranschluss ausgebildet ist, der zur Aufnahme eines zweiten Steuerteildrucks ausgebildet ist, der zusätzlich zu einem ersten Steuerteildruck des ersten Steueranschlusses und zeitlich begrenzt und entgegen gerichtet eines ersten Steuerteildrucks des ersten Steueranschlusses wirkt.

Insbesondere ist die Zusatzentlüftungsleitung als eine Rückkoppel-Leitung mit einem Entlüftungsrückraum des Entlüftungsventils und dem Entlüftungsanschluss und/oder dem weiteren Entlüftungsanschluss pneumatisch verbunden ist, wobei eine noch weitere Entlüftungsleitung mit einem noch weiteren zweiten Entlüftungs-Zweiganschluss an die Entlüftungsleitung anschließt. Vorzugsweise schließt am Entlüftungsrückraum, insbesondere bei einem Entlüftungsanschluss des Entlüftungsventils, eine noch weitere Entlüftungsleitung an, die mit einem noch weiteren zweiten Entlüftungs-Zweiganschluss an die Entlüftungsleitung anschließt zwischen Entlüftungsventil und dem ersten Entlüftungs-Zweiganschluss.

Vorzugsweise ist bei der Druckluftversorgungsanlage das Entlüftungsventil mittels einem mit Steuerdruck druckbeaufschlagbaren Relaiskolben gebildet, wobei der Steuerdruck von dem Steuerventil schaltbar ist, und der Relaiskolben zur Schaltung des Entlüftungsventils ausgebildet ist, insbesondere in einen geöffneten oder geschlossenen Zustand, insbesondere das Entlüftungsventil als ein pneumatisch angesteuertes 2/2-Wegeventil gebildet ist.
Dabei hat der Relaiskolben eine einer Steuerkammer zugewandte erste Steuerfläche, und eine einem Entlüftungsrückraum zugewandte zweite Steuerfläche, wobei die erste und die zweite Steuerfläche zur gegeneinander gerichteten Aufnahme des ersten Steuerteildrucks und des zweiten Steuerteildrucks angeordnet sind, wobei der erste und zweite Steuerteildruck aus der Relaiskolbensteuerleitung abgeleitet ist.

Im Rahmen einer besonders bevorzugten Weiterbildung ist vorgesehen damit, dass ein Relaiskolben des Entlüftungsventils zweiseitig auf gegenüberliegenden Seiten des Relaiskolbens druckbeaufschlagt wird mit einer vom Steuerdruck abgeleiteten Druckgröße, nämlich eine erste Steuerfläche zur Aufnahme einer ersten Steuerteildruckgröße des Steuerteildrucks und einer zweiten Steuerfläche zur Aufnahme einer zweiten Steuerteildruckgröße des Steuerteildrucks, die gegeneinander gerichtet sind; dies jedenfalls beschränkt auf einen Teilzeitbereich des gesamten Entlüftungsprozesses, vorzugsweise am Anfang des Entlüftungsprozesses.

Der Relaiskolben wird bildlich beschrieben beidseitig, insbesondere kurzzeitig für eine Anfangsphase, quasi zu einem beidseitig druckbeaufschlagten Zylinder, so dass die dadurch entstehende Verzögerung beim Öffnen des Relaiskolbens im Entlüftungsvorgang zur bedarfsabhängigen Umverteilung der anströmenden Steuerluft und im Ergebnis zu einem langsameren Öffnungsvorgang des Lufttrockners führt. Die Verzögerung ist ausreichend, um einen Entlüftungsknall deutlich zu dämpfen und insgesamt die Geräuschkulisse bei einem Entlüftungsvorgang zu vermindern. Insbesondere ist die noch weitere Entlüftungsleitung zur Entlüftung des Entlüftungsrückraums des Entlüftungsventils bei Betätigung des Relaiskolbens ausgebildet und die noch weitere Entlüftungsleitung hinsichtlich des Druckluftdurchlasses mittels einer dritten Drossel gedrosselt, und/oder wobei aufgrund des dadurch definierten Druckluftdurchlasses aus dem Entlüftungsrückraum auch eine Bewegung des Relaiskolbens bei Betätigung gedämpft wird.

Ausführungsformen der Erfindung werden nachfolgend anhand der Figuren der Zeichnung im Vergleich zum Stand der Technik, welcher zum Teil ebenfalls dargestellt ist, beschrieben. Diese sollen die Ausführungsformen nicht notwendigerweise maßstäblich darstellen, vielmehr sind die Figuren, wo zur Erläuterung dienlich, in schematisierter und/oder leicht verzerrter Form ausgeführt. Im Hinblick auf Ergänzungen der aus den Figuren unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Figuren und/oder den Ansprüchen offenbarten Merkmale. Die allgemeine Idee der Erfindung ist nicht beschränkt auf die exakte Form oder das Detail der im Folgenden dargestellten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Identische oder ähnliche Teile oder Teile identischer oder ähnlicher Funktion sind, dort wo sinnvoll der Einfachheit halber mit einem gleichen Bezugszeichen versehen.

Weitere Vorteile, Merkmale und Einzelheiten der Erfindung ergeben sich aus der nachfolgenden Beschreibung der bevorzugten Ausführungsformen sowie anhand der folgenden Figuren. Im Einzelnen zeigen:
- Fig. 1: eine Druckluftversorgungsanlage, insbesondere ein Druckluftversorgungssystem wie es beispielsweise aus dem Stand der Technik bekannt ist;
- Fig. 2: eine mögliche Ausführungsform der erfindungsgemäßen Druckluftversorgungsanlage, insbesondere ein Druckluftversorgungssystem;
- Fig. 3: eine andere bevorzugte Ausführungsform der erfindungsgemäßen Druckluftversorgungsanlage, insbesondere ein Druckluftversorgungssystem;
- Fig. 4: eine weitere mögliche Ausführungsform der erfindungsgemäßen Druckluftversorgungsanlage, insbesondere ein Druckluftversorgungssystem;
- Fig. 5: eine noch mehr bevorzugte Ausführungsform der erfindungsgemäßen Druckluftversorgungsanlage, insbesondere ein Druckluftversorgungssystem;
- Fig. 6A: eine schematisch Darstellung einer mögliche Ausführungsform einer Ventilanordnung;
- Fig. 6B: eine schematische Darstellung eines Teilbereiches einer weiteren Ausführungsform einer Ventilanordnung, insbesondere eines Teilbereiches eines Entlüftungsventils;
- Fig. 6C: eine schematische Darstellung eines Teilbereiches einer weiteren Ausführungsform einer Ventilanordnung, insbesondere eines Teilbereiches eines Entlüftungsventils; und
- Fig. 7A - E: einen möglichen Ablauf für ein Verfahren zum Betreiben einer Druckluftversorgungsanlage, insbesondere eines Druckluftversorgungssystems, gemäß der möglichen Ausführungsform wie sie in der Fig. 4 dargestellt ist;
- Fig. 8: eine erste besonders bevorzugte Ausführungsform, welche insbesondere die Ausführungsform der Fig. 2 gemäß der weiterbildenden Variante der Erfindung vorteilhaft ergänzt;
- Fig. 9: eine zweite besonders bevorzugte abgewandelte Ausführungsform, welche insbesondere die Ausführungsform der Fig. 3 gemäß der weiterbildenden Variante der Erfindung ergänzt;
- Fig. 10: eine besonders bevorzugte Ausführungsform der erfindungsgemäßen Druckluftversorgungsanlage, insbesondere ein Druckluftversorgungssystem, welche insbesondere die Ausführungsform der Fig. 4 gemäß der weiterbildenden Variante der Erfindung ergänzt;
- Fig. 11: eine weitere besonders bevorzugte Ausführungsform der erfindungsgemäßen Druckluftversorgungsanlage mit einer Abwandlung zur Fig. 8 und Fig. 10 zur Unterstützung eines Luftpolsters am Relaiskolben;
- Fig. 12: noch eine weitere besonders bevorzugte Ausführungsform der erfindungsgemäßen Druckluftversorgungsanlage mit einer Abwandlung zur Fig. 8 und Fig. 10 zur Unterstützung eines Luftpolsters am Relaiskolben.

In der Beschreibung und in den Figuren sind identische oder ähnliche Merkmale oder Merkmale identischer oder ähnlicher Funktion mit gleichen Bezugszeichen gekennzeichnet.

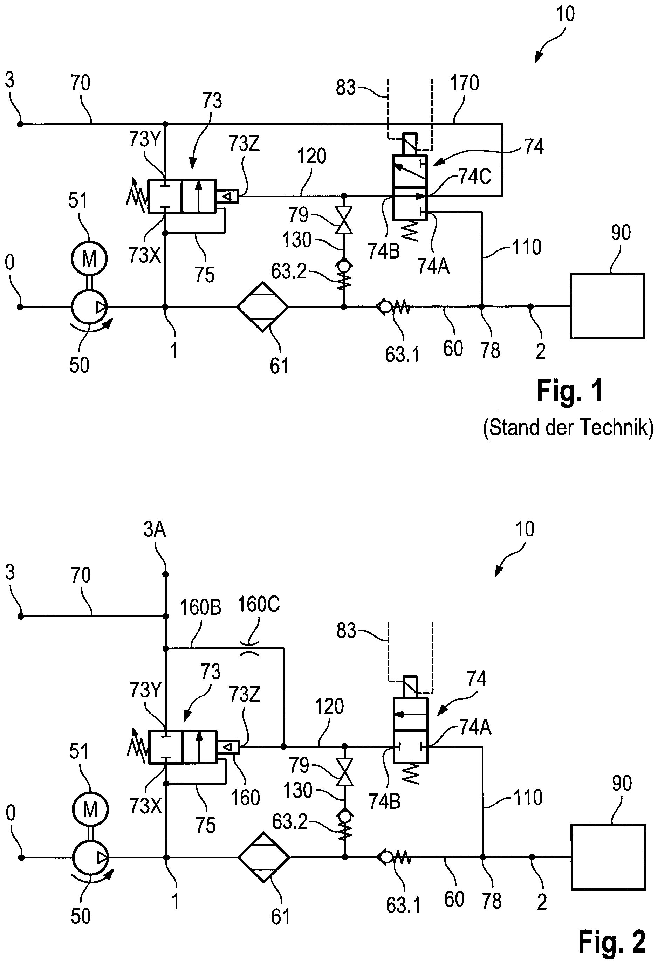

Fig. 1 zeigt eine schematische Darstellung einer Druckluftversorgungsanlage 10 wie sie beispielsweise aus dem Stand der Technik bekannt ist. Die dargestellte Druckluftversorgungsanlage 10 ist an eine Pneumatikanlage 90 angeschlossen ist. Zusammen bilden die Druckluftversorgungsanlage 10 und die Pneumatikanlage 90 ein pneumatisches System.

Weiter zeigt Fig. 1 eine Druckluftversorgungsanlage 10, welche eine Druckluftzuführung 1 und einen Druckluftanschluss 2 zur Pneumatikanlage 90 aufweist. Die Druckluftzuführung 1 ist vorliegend mit einem Luftzuführungsanschluss 0 über eine Ansaugleitung über einen - von einem Motor 51 angetriebenen - Luftverdichter 50 pneumatisch verbunden, wobei der Motor 51 einen Kompressor eines Luftverdichters 50 antreibt.

Eine erste pneumatische Verbindung ist mit einer Pneumatikhauptleitung 60 zwischen der Druckluftzuführung 1 und dem Druckluftanschluss 2 zur Pneumatikanlage 90 gebildet. In der Pneumatikhauptleitung 60 ist darüber hinaus ein Lufttrockner 61 zum Reinigen und Trocken der Druckluft vorgesehen.

Weiterhin umfasst die Druckluftversorgungsanlage 10 ein steuerbares Entlüftungsventil 73 und ein elektrisch ansteuerbares Steuerventil 74, das in Form eines 3/2-Wegeventils gebildet ist. Das Steuerventil 74 ist mit drei Anschlüssen 74A, 74B und 74C gebildet, nämlich einen Steuerdrucknehmeranschluss 74A, einen Steuerdruckgeberanschluss 74B und einem Entlüftungsanschluss 74C. Vorliegend ist das Steuerventil 74 mit den Steuerdruckgeberanschluss 74B über eine pneumatische Steuerleitung 110 mit der Pneumatikhauptleitung 60 und über den Entlüftungsanschluss 74C mit der Entlüftungsleitung 70 pneumatisch verbunden. Darüberhinaus ist das Steuerventil 74 über den Steuerdrucknehmeranschluss 74A des Steuerventils 74 über eine Steuerrelaisleitung 120 mit dem Entlüftungsventil 73 pneumatisch verbunden.

Das 3/2-Steuerventil 74 umfasst zwei Schaltzustände, nämlich einen ersten, unbestromten Schaltzustand, welcher zwischen dem Steuerdrucknehmeranschluss 74A und dem Steuerdruckgeberanschluss 74B geschlossen und zwischen dem Steuerdrucknehmeranschluss 74A und dem Entlüftungsanschluss 74C geöffnet ist, und einen zweiten, bestromten Schaltzustand, welcher zwischen dem Steuerdrucknehmeranschluss 74A und dem Steuerdruckgeberanschluss 74B geöffnet und zwischen dem Steuerdrucknehmeranschluss 74A und dem Entlüftungsanschluss 74C geschlossenen ist. Das Steuerventil 74 kann mit einem über eine elektrische Steuerleitung 83 übermittelbaren Steuersignal, in Form eines Spannungs- und/oder Stromsignals an einer Spule, angesteuert werden und so das Steuerventil 74 von dem ersten in den zweiten Schaltzustand überführen.

Bei Ansteuerung - mittels eines Spannungs- und/oder Stromsignals - wird das Steuerventil 74 von dem ersten stromlosen Schaltzustand in den zweiten Schaltzustand, der zwischen dem Steuerdrucknehmeranschluss 74A und dem Steuerdruckgeberanschluss 74B geöffnet überführt, so dass über die Steuerleitung 110 und die pneumatische Steuerrelaisleitung 120 Steuerdruck aus der Pneumatikhauptleitung 60 abgeleitet und als Druck zur Steuerung des steuerbaren Entlüftungsventiles 73, insbesondere zur Steuerung eines Relaiskolbens des Entlüftungsventiles 73, weitergeleitet wird. Durch den Steuerdruck wird der Relaiskolben des Entlüftungsventiles 73 betätig, insbesondere verlagert, so dass das Entlüftungsventiles 73 geöffnet wird.

Das Entlüftungsventil 73 umfasst einem ersten Schaltzustand, der zwischen einem ersten Entlüftungsventilanschluss 73X und einem zweiten Entlüftungsventilanschluss 73Y über die Entlüftungsleitung 170 zum Entlüftungsanschluss 3 geschlossen ist; und einem zweiten Schaltzustand des Entlüftungsventils 73, der zwischen dem ersten Entlüftungsventilanschluss 73X und dem zweiten Entlüftungsventilanschluss 73Y über die Entlüftungsleitung 170 zum Entlüftungsanschluss 3 geöffnet ist.

Mittels des Überführens des Steuerventils 74 von dem ersten in den zweiten Schaltzustand, nämlich von dem ersten stromlos (zwischen dem Steuerdrucknehmeranschluss 74A und dem Steuerdruckgeberanschluss 74B) geschlossen Zustand in den zweiten bestromten geöffneten Zustand, wird das Entlüftungsventil 73 vom ersten in den zweiten Zustand überführt, so dass anschließend die Druckluftzuführung 1 und der Entlüftungsanschluss 3 über das geöffnete Entlüftungsventil 73 pneumatisch verbunden sind und die Druckluftversorgungsanlage 10, insbesondere die Pneumatikanlage 90, entlüftet werden kann.

Nach dem die Pneumatikanlage 90 entlüftet ist, wird das Steuerventil 74 wieder vom zweiten in den ersten Schaltzustand geschaltet. Im ersten Schaltzustand des Steuerventiles, welcher zwischen dem Steuerdrucknehmeranschluss 74A und dem Entlüftungsanschluss 74C geöffnet ist, kann dann der Steuerdruck in der Steuerrelaisleitung 120 über die weitere Entlüftungsleitung 170 entlüftet bzw. abgeführt werden.

Fig. 2 zeigt eine vereinfachte, schematische Darstellung einer bevorzugten Ausführungsform der erfindungsgemäßen Druckluftversorgungsanlage 10, die an eine Pneumatikanlage 90 angeschlossen ist. Zusammen bilden die Druckluftversorgungsanlage 10 und die Pneumatikanlage 90 ein pneumatisches System. Die dargestellte Druckluftversorgungsanlage 10 dient zum Betreiben der Pneumatikanlage 90, ist aber gegenüber dem bekannten Stand der Technik (siehe Fig. 1) nicht mit einem 3/2-Wegesteuerventil, sondern mit einem 2/2-Wegesteuerventil 74 und einer gedrosselten Zusatzentlüftungsleitung 160B gebildet.

Das in der Fig. 2 gezeigte Ausführungsbeispiel für eine Druckluftversorgungsanlage 10 umfasst eine Druckluftzuführung 1, einen Druckluftanschluss 2 und einen Entlüftungsanschluss 3. Weiterhin ist zwischen der Druckluftzuführung 1 und dem Druckluftanschluss 2 eine Pneumatikhauptleitung 60 und zwischen dem Druckluftanschluss 2 und dem Entlüftungsanschluss 3 eine Entlüftungsleitung 70 gebildet.

Eine erste pneumatische Verbindung ist mit einer Pneumatikhauptleitung 60 zwischen der Druckluftzuführung 1 und dem Druckluftanschluss 2 zur Pneumatikanlage 90 gebildet. In der Pneumatikhauptleitung 60 sind ein Lufttrockner 61 und ein Trennventil, das als ein erstes pneumatisches Rückschlagventil 63.1 gebildet ist, angeordnet.

Die Pneumatikhauptleitung 60 und die Entlüftungsleitung 70 sind mittels eines Entlüftungsventils 73 sowie einer entsprechenden pneumatischen Verbindung pneumatisch miteinander verbunden. Die Pneumatikhauptleitung 60 ist dabei über einen ersten Entlüftungsventilanschluss 73X am Entlüftungsventil 73 und die Entlüftungsleitung 70 über einen zweiten Entlüftungsventilanschluss 73Y am Entlüftungsventils 73 pneumatisch an das Entlüftungsventil 73 angeschlossen.

Darüberhinaus weist das Entlüftungsventil 73 einen Steueranschluss 73Z auf, welcher mittels einer pneumatischen Steuerrelaisleitung 120 in pneumatischer Verbindung mit dem Steuerventil 74 verbunden ist. Das Entlüftungsventil 73 ist vorliegend zusätzlich mit einer Druckbegrenzung 75 versehen, wobei der Druckbegrenzung 75 den Steuerdruck am Steueranschluss 73Z des Entlüftungsventils 73 begrenzt.

Das Steuerventil 74 ist in Form eines 2/2-Wegeventils gebildet, das (vorliegend) in einem ersten stromlosen Schaltzustand zwischen einem Steuerdrucknehmeranschluss 74A und einem Steuerdruckgeberanschluss 74B zum Steueranschluss 73Z geschlossen ist und in einem zweiten bestromten Schaltzustand zwischen dem Steuerdrucknehmeranschluss 74A und dem Steuerdruckgeberanschluss 74B zum Steueranschluss 73Z geöffnet ist.

Weiterhin umfasst die Druckluftversorgungsanlage 10 eine gedrosselte Zusatzentlüftungsleitung 160B, wobei die Zusatzentlüftungsleitung 160B mittels einer Zusatzdrossel 160C gedrosselt wird. Bei der Zusatzdrossel 160C bzw. dem zusätzlichen Drosselventil handelt es sich um eine lokale Verengung in der Zusatzentlüftungsleitung 160B, insbesondere eine lokale Verengung des Strömungsquerschnittes der Zusatzentlüftungsleitung 160B. Hierdurch wird der Druck der durchfließenden Druckluft vermindert. In einer nicht dargestellten Ausgestaltung kann die Zusatzdrossel 160C auch als eine regelbare Drossel ausgebildet sein. Bevorzugt weist die Zusatzdrossel 160C eine lokale Verengung mit einem maximalen Durchmesser von 1 Millimeter auf. Bevorzugt ist es vorgesehen, dass die Zusatzdrossel 160 C einen Durchmesser aufweist, der kleiner als der einer ersten Drossel (nicht dargestellt) ist, welche in der Pneumatikhauptleitung 60 angeordnet ist, und über welche (erste Drossel) die Druckluftversorgungsanlage - bei geöffnetem Entlüftungsventil - entlüftet wird. Beispielsweise kann es sein, das die Zusatzdrossel 160C einen Durchmesser von 0.9mm und die erste Drossel in der Pneumatikhauptleitung 60 einen Durchmesser von 1.2mm aufweist.

Mittels der gedrosselten Zusatzentlüftungsleitung 160B ist - im ersten und/oder zweiten Schaltzustand des Entlüftungsventils 73 (je nach Ausführungsform) - die pneumatische Steuerrelaisleitung 120 mit der Entlüftungsleitung 70 pneumatisch verbunden, so dass die pneumatische Steuerrelaisleitung 120 mittels der Zusatzentlüftungsleitung 160B mit dem Entlüftungsanschluss 3 und/oder einen weiteren Entlüftungsanschluss 3A verbunden ist. Die gedrosselte Zusatzentlüftungsleitung 160B ist dabei sowohl im ersten als auch im zweiten Schaltzustand des Entlüftungsventils 73 geöffnet.

Die pneumatische Steuerrelaisleitung 120, die zwischen dem Steuerdruckgeberanschluss 74B des Steuerventiles 74 und dem Steueranschluss 73Z des Entlüftungsventiles 73 gebildet ist, ist vorliegend als eine mit Steuerdruck beaufschlagbare pneumatische Steuerrelaisleitung 120 gebildet, insbesondere als eine Relaiskolbensteuerleitung für einen Relaiskolben 160 des Entlüftungsventils 73.

Das Steuerventil 74 kann mit einem über eine elektronische Steuerleitung 83 übermittelten Steuersignal in Form eines Spannungs- und/oder Stromsignales an die Spule des Steuerventiles 74 angesteuert werden. Hierbei wird das Steuerventil vom ersten Schaltzustand, der zwischen dem Steuerdrucknehmeranschluss 74A und dem Steuerdruckgeberanschluss 74B zum Steueranschluss 73Z des Entlüftungsventils 73 geschlossen ist, in den zweiten Schaltzustand, der zwischen dem Steuerdrucknehmeranschluss 74A und dem Steuerdruckgeberanschluss 74B zum Steueranschluss 73Z des Entlüftungsventils 73 geöffnet ist, überführt. Im zweiten Schaltzustand des Steuerventil 74 wird die Steuerrelaisleitung 120 über die pneumatische Steuerleitung 110 mit Druckluft aus der Pneumatikhauptleitung 60 beaufschlagt, um den Steueranschluss 73Z des Entlüftungsventils 73 mit Druck zu versorgen und das Entlüftungsventil 73 von einem ersten oder zweiten geschlossenen Schaltzustand des Entlüftungsventils 73 in den jeweils anderen Schaltzustand des Entlüftungsventils 73 zu überführen. Anders ausgedrückt kann durch das Ansteuern des Steuerventils 74 das Entlüftungsventil 73 zum Entlüften der Pneumatikanlage 90 (indirekt) geöffnet werden.

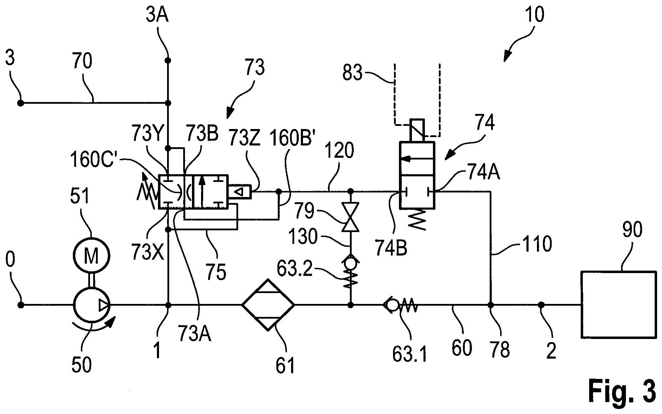

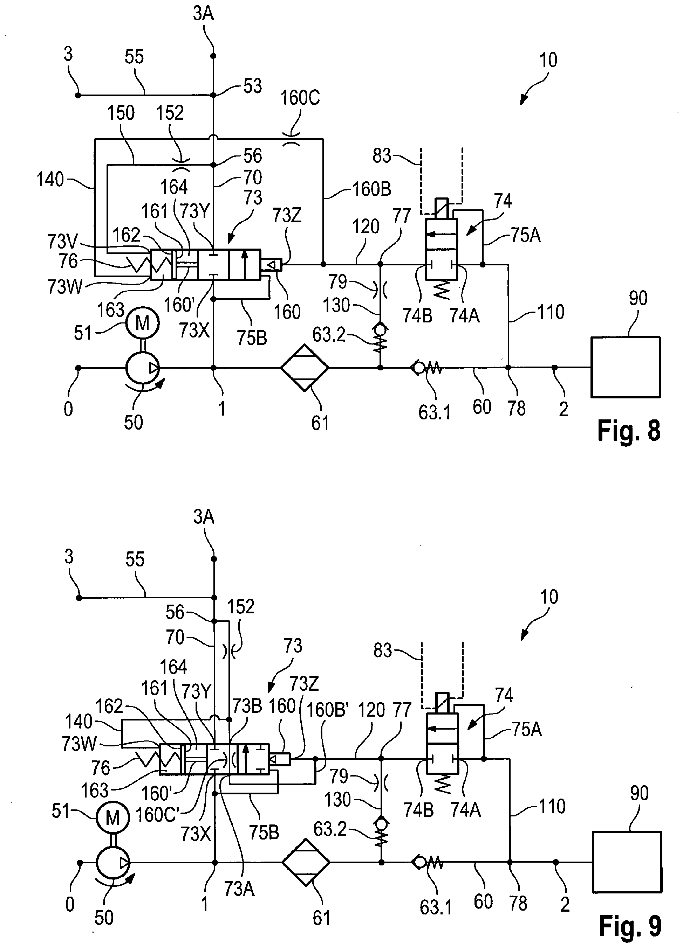

Weiterhin umfasst die Druckluftversorgungsanlage eine weitere pneumatische Steuerrelaisentlüftungsleitung 130, die die Pneumatikhauptleitung 60 mit der pneumatischen Steuerrelaisleitung 120 pneumatisch verbindet. In der weiteren pneumatischen Steuerrelaisentlüftungsleitung 130 ist ein Absperrventil 79 oder eine Drossel und ein zweites Rückschlagventil 63.2 zwischen der Pneumatikhauptleitung 60 und der pneumatischen Steuerrelaisleitung 120 angeordnet. Die bevorzugte Ausführungsform des als Absperrventils 79 bezeichneten Bauteils der Fig.2 und der weiteren Figuren 3 bis 7E ist eine Drossel mit einem konstanten oder verstellbaren Querschnitt, wie dies auch in den nachfolgend beschriebenen Figuren 8 bis 12 dargestellt ist.

Fig. 3 zeigt eine weitere Ausführungsform der Druckluftversorgungsanlage, die im Wesentlichen dem in der Fig. 2 dargestellten Ausführungsbeispiel entspricht. Der Unterschied zu der in der Fig. 2 gezeigten Ausführungsform besteht darin, dass die - mit einer Zusatzdrossel 160C' - gedrosselte weitere pneumatische Zusatzentlüftungsleitung 160B' über das Entlüftungsventil 73 geführt wird. Hierbei ist die Zusatzentlüftungsleitung 160B' über einen ersten Zusatzentlüftungsventilanschluss 73A mit der Steuerrelaisleitung 120 und über einen zweiten Zusatzentlüftungsventilanschluss 73B mit dem Entlüftungsanschluss 3 und/oder einen weiteren Entlüftungsanschluss (nicht dargestellt) pneumatisch verbunden. In einer bevorzugten Ausgestaltungforme wird die Zusatzentlüftungsleitung 160B' in Form einer Aussparung im Relaiskolben oder im Gehäuse des Entlüftungsventil 73 gebildet. Hierbei kann dann Druckluft entweder durch die Aussparung im Relaiskolben oder über die Aussparung im Entlüftungsventilgehäuse des Entlüftungsventiles zum Entlüftungsanschluss 3 und/oder dem weiteren Entlüftungsanschluss strömen bzw. geführt werden. Eine derart ausgebildete Zusatzentlüftungsleitung 160B' ist konstruktiv besonders einfach umzusetzen und bedarf nur geringer konstruktiver Eingriffe in ein bestehendes System, insbesondere in eine bestehende Druckluftversorgungsanlage. Bevorzugt wird die Aussparung, welche die Zusatzentlüftungsleitung bildet, in Form einer Bohrung im Relaiskolben oder als Schlitz im Gehäuse des Entlüftungsventiles gebildet.

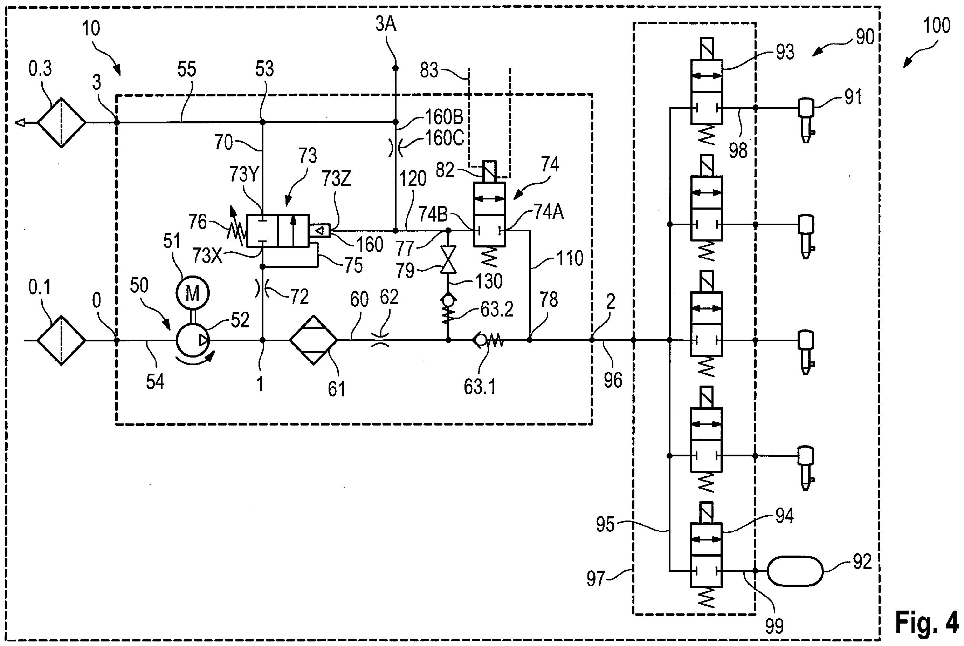

Fig. 4 zeigt eine schematische Darstellung eines Druckluftversorgungssystems mit einer Druckluftversorgungsanlage 10 und einer Pneumatikanlage 90 in Form einer Luftfederanlage. Die Luftfederanlage weist in diesem Fall eine Anzahl von vier sogenannten Bälgen 91 auf, die jeweils einem Rad eines Fahrzeugs (nicht dargestellt) zugeordnet sind und eine Luftfeder des Fahrzeugs bilden. Des Weiteren weist die Luftfederanlage einen Speicher 92 zur Speicherung schnell verfügbarer Druckluft für die Bälge 91 auf. Den Bälgen 91 ist jeweils in einer Feder-Zweigleitung 98 ein Magnetventil 93 vorgeordnet, welches jeweils als Niveauregelventil zum Öffnen oder Schließen einer mit einem Balg 91 gebildeten Luftfeder dient. Die Magnetventile 93 in den Feder-Zweigleitungen 98 sind als 2/2-Wegeventile ausgebildet. Einem Speicher 92 ist in einer Speicher-Zweigleitung 99 ein Magnetventil 94 in Form eines weiteren 2/2-Wegeventils als Speicherventil vorgeordnet. Die Magnetventile 93, 94 sind mittels der Feder- und Speicher-Zweigleitungen 98, 99 an eine gemeinsame Sammelleitung, eine Galerie 95 bildende Pneumatikleitung, angeschlossen. Die Galerie 95 ist über eine weitere Pneumatikleitung 96 zur Bildung einer pneumatischen Verbindung mit einem Druckluftanschluss 2 der Druckluftversorgungsanlage 10 pneumatisch verbunden. Vorliegend sind die Magnetventile 93, 94 in einem Ventilblock 97 mit fünf Ventilen angeordnet. Die Magnetventile 93, 94 sind in Fig. 4 in einem stromlosen Zustand gezeigt, d. h. die Magnetventile 93, 94 sind als stromlos geschlossene Magnetventile gebildet. Andere, hier nicht gezeigte, abgewandelte Ausführungsformen können eine anderen Anordnung der Magnetventile 93, 94 realisieren - es können auch weniger Magnetventile im Rahmen des Ventilblocks genutzt werden.

Insbesondere kann ein im Weiteren als Trennventil beschriebenes Rückschlagventil in einer hier nicht gezeigten Ausführungsform in der Druckluftversorgungsanlage 10 angeordnet sein. Ein Trennventil kann auch in der Pneumatikanlage 90 angeordnet sein, beispielsweise auch im Rahmen des Ventilblocks 97. Ebenso kann die Pneumatikanlage 90 einen hier vorliegend nicht näher gezeigten Spannung/Druck-Sensor aufweisen, welcher in einer zusätzlichen, hier nicht dargestellten Zweigleitung an der Galerie 95 angeschlossen sein kann, so dass über den Spannung/Druck-Sensor ein Druck in der Galerie 95 der Pneumatikanlage 90 gemessen werden kann.

Die Druckluftversorgungsanlage 10 dient zum Betreiben der Pneumatikanlage 90. Die Druckluftversorgungsanlage 10 weist dazu eine Druckluftzuführung 1 und einen Druckluftanschluss 2 zur Pneumatikanlage 90 auf. Die Druckluftzuführung 1 ist vorliegend mit einer Luftzuführung 0, einem der Luftzuführung 0 vorgeordneten Luftfilter 0.1 und - über eine Ansaugleitung 54 oder dergleichen pneumatischen Verbindung - einem der Luftzuführung 0 nachgeordneten über einen Motor 51 (M) angetriebenen Luftverdichter 50 pneumatisch verbunden, wobei der Motor 51 (M) einen Kompressor 52 des Luftverdichters 50 antreibt.

Eine erste pneumatische Verbindung ist vorliegend mit einer Pneumatikhauptleitung 60 zwischen der Druckluftzuführung 1 und dem Druckluftanschluss 2 gebildet, die einerseits am Druckluftzuführungsanschluss der Druckluftzuführung 1 und andererseits an den Druckluftanschluss 2 sowie der weiteren Pneumatikleitung 96 zur Bildung der pneumatischen Verbindung anschließt. In der Pneumatikhauptleitung 60 sind ein Lufttrockner 61 und eine erste Drossel 62 angeordnet. Außerdem ist in der Pneumatikhauptleitung 60 ein Trennventil angeordnet, das in Form eines ersten pneumatischen Rückschlagventils 63.1 gebildet ist. Dieses kann bevorzugt auch als pneumatisch entsperrbares Rückschlagventil gebildet sein.

Weiter weist die Druckluftversorgungsanlage 10 eine mit der Pneumatikhauptleitung 60 und einem Entlüftungsanschluss 3 und weiterem Filter 0.3 und/oder einen Schalldämpfer pneumatisch verbundene zweite pneumatische Verbindung auf, nämlich eine Entlüftungsleitung 70. Vorliegend ist die Entlüftungsleitung 70 am Druckluftzuführungsanschluss der Druckluftzuführung 1 an der Pneumatikhauptleitung 60 angeschlossen. In Richtung des Entlüftungsanschlusses 3 ist in der Entlüftungsleitung 70 eine zweite Drossel 72 und ein steuerbares Entlüftungsventil 73 angeordnet. Das in der, durch die Entlüftungsleitung 70 gebildeten, zweiten pneumatischen Verbindung angeordnete Entlüftungsventil 73 ist als ein 3/2-Ventil gebildet.

Das steuerbare Entlüftungsventil 73 ist als indirekt geschaltetes Relaisventil gebildet. Das Steuerventil 74 kann mit einem über eine elektronische Steuerleitung 83 übermittelbarem Steuersignal in Form eines Spannungs- und/oder Stromsignals an eine Spule 82 des Steuerventils 74 angesteuert werden, so dass eine Kraft auf einen mit dem Kolben des Steuerventils 74 zusammenwirkenden oder diesen bildenden Magnetanker wirkt. Bei Ansteuerung kann das Steuerventil 74 von der gezeigten, stromlos geschlossenen Stellung in eine pneumatisch geöffnete Stellung überführt werden, in der ein über eine pneumatische Steuerleitung 110 - hier am Haupt-Zweiganschluss 78 aus der Pneumatikhauptleitung 60 - abgeleiteter Druck zur pneumatischen Steuerung des steuerbaren Entlüftungsventil 73 an das Relaisventil weitergegeben wird.

Das steuerbare Entlüftungsventil 73 ist vorliegend zusätzlich mit einer Druckbegrenzung 75 versehen. Die Druckbegrenzung 75 greift über eine weitere pneumatische Steuerleitung vor dem Entlüftungsventil 73 - konkret zwischen zweiter Drossel 72 und Entlüftungsventil 73 - einen Druck ab, welcher bei Übersteigen eines Schwelldrucks den Kolben des Entlüftungsventils 73 gegen die Kraft einer einstellbaren Feder 76 vom Ventilsitz hebt - also das steuerbare Entlüftungsventil 73 auch ohne Ansteuerung über das Steuerventil 74 in die geöffnete Stellung bringt. Auf diese Weise wird vermieden, dass ungewollt ein zu hoher Druck im pneumatischen System 100 entsteht.

Das Steuerventil 74, das in Form eines 2/2-Wegeventils gebildet ist, umfasst zwei Anschlüsse, nämlich einen Steuerdrucknehmeranschluss 74A und dem Steuerdruckgeberanschluss 74B und trennt im vorliegend, stromlos geschlossenen Zustand die Steuerleitung 110 und eine Steuerrelaisleitung 120 zum Relaiskolben 160 des Entlüftungsventils 73. Die Steuerrelaisleitung 120 ist über eine Zusatzentlüftungsleitung 160B mit dem Entlüftungsanschluss 3 und/oder einem weiteren Entlüftungsanschluss 3A pneumatisch verbunden.

Die weitere Zusatzentlüftungsleitung 160B weist eine zusätzliche Zusatzdrossel 160C auf, wobei die Zusatzdrossel 160C einen Durchmesser von höchsten 1 mm aufweist. Bevorzugt weist die Zusatzdrossel 160C einen Durchmesser auf, der kleiner als der Durchmesser einer erste Drossel 62 ist, die in der Pneumatikhauptleitung 60 angeordnet ist.

Weiterhin ist in der Druckluftversorgungsanlage 10 eine weitere pneumatische Steuerrelaisentlüftungsleitung 130 zwischen Pneumatikhauptleitung 60 und der Steuerrelaisleitung 120 vorgesehen, die am Zweiganschluss 77 an die Steuerrelaisleitung 120 angeschlossen ist. In der weiteren pneumatischen Steuerrelaisentlüftungsleitung 130 ist ein Absperrventil 79 oder eine Drossel und eine weiteres Rückschlagventil 63.2 angeordnet.

Über das Steuerventil 74 kann beim Anstehen eines von der Pneumatikhauptleitung 60 oder von der weiteren Pneumatikleitung 96 über die pneumatische Steuerleitung 110 abgeleiteten Steuerdruckes das Rückschlagventil 63.2 unter Druckbeaufschlagung der pneumatischen Steuerrelaisentlüftungsleitung 130 - d. h. durch Überführen des Steuerventils 74 in den geöffneten Zustand - entsperrt werden. Das Überführen des Steuerventils 74 in den geöffneten Zustand führt auch zum Überführen des Entlüftungsventils 73 von der geschlossenen Stellung in eine geöffnete Stellung und über die pneumatische Steuerrelaisentlüftungsleitung 130, das Rückschlagventils 63.2, die erste Drossel 62, den Trockner 61, die zweite Drossel 72 und schließlich das geöffnete Entlüftungsventil 73 zum Entlüften der Pneumatikanlage 90. In besonderer Weise führt dies auch zu einem beidseitigen pneumatischen Öffnen des Lufttrockners 61. Diese Betriebsstellung kann im Betrieb zum Entlüften der Pneumatikanlage 90 und gleichzeitigen Regenerieren des Lufttrockners 61 genutzt werden.

Die in Fig. 4 gezeigte Betriebsstellung der Druckluftversorgungsanlage 10 dient unter Durchfluss des Rückschlagventils 63.1 vor allem zum Befüllen der Pneumatikanlage 90 über die Pneumatikhauptleitung 60. Die den Bälgen 91 vorgeordneten Magnetventile 93 und/oder das dem Speicher 92 vorgeordnete Magnetventil 94 werden in eine geöffnete Stellung gebracht. Gleichwohl ist bei geschlossener Stellung der Magnetventile 93, 94 in der Pneumatikanlage 90 - aufgrund des vorliegend Rückschlagventils 63.1 - eine Betriebsstellung der Pneumatikanlage 90 entkoppelt von der Druckluftversorgungsanlage 10 möglich. Mit anderen Worten kann ein Querschalten von Bälgen 91 (z. B. im Off-Road-Betrieb eines Fahrzeugs 1000), ein Füllen der Bälge 91 aus dem Speicher 92 oder eine Druckmessung in der Pneumatikanlage 90 über die Galerie 95 vorgenommen werden, ohne dass die Druckluftversorgungsanlage 10 druckbeaufschlagt wird. Insbesondere wird der Lufttrockner 61 aufgrund des vom Druckluftanschluss 2 zur Druckluftzuführung 1 gesperrten Rückschlagventils 63.1 und des geschlossenen Steuerventils 74 vor unnötiger Beaufschlagung mit Druckluft geschützt.

Es wurde bei der vorliegend gezeigten Ausführungsform erkannt, dass eine Beaufschlagung des Lufttrockners 61 mit Druckluft nicht bei jeder Betriebsstellung der Pneumatikanlage 90 vorteilhaft ist. Vielmehr ist es für eine effektive und schnelle Regeneration des Lufttrockners 61 vorteilhaft, wenn diese ausschließlich im Falle einer Entlüftung der Pneumatikanlage 90 erfolgt; d. h. in einer Entlüftungsrichtung von Druckluftanschluss 2 zum Druckluftzuführungsanschluss der Druckluftzuführung und dann zum Entlüftungsanschluss 3.

Dazu wird das Steuerventil 74 vom ersten Schaltzustand in den zweiten Schaltzustand gebracht, so dass das Entlüftungsventil 73 öffnet. Eine Entlüftung der Pneumatikanlage 90 kann über die pneumatische Steuerleitung 110, das Steuerventil 74, die pneumatische Steuerrelaisentlüftungsleitung 130, das Rückschlagventil 63.2, die erste Drossel 62, unter Regeneration des Lufttrockners 61 sowie über die zweite Drossel 72 und das geöffnete Entlüftungsventil 73 zum Entlüftungsanschluss 3 erfolgen.

Im vorliegenden Fall ist das Entlüftungsventil 73 mit einem Relaiskolben 160 versehen, welcher zur Beaufschlagung mit einem Steuerdruck ausgebildet ist, um das Entlüftungsventil 73 von einer durch die Ventilfeder 76 gehaltenen ersten geschlossenen steuerdruckfreien Ventilstellung bei Druckbeaufschlagung in eine durch den Steuerdruck aktuierten zweiten Ventilstellung gegen die Druckkraft der Ventilfeder 76 zu überführen.

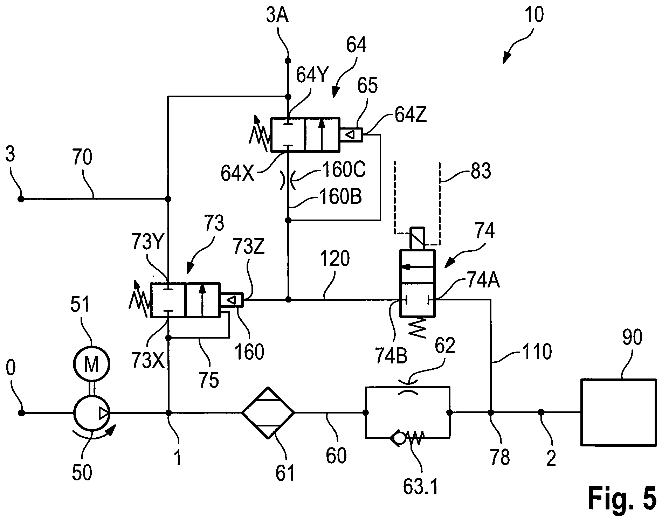

Fig. 5 zeigt eine noch mehr bevorzugte Ausführungsform des Druckluftversorgungssystems 10, wie sie bereits im Wesentlichen in den Fig. 2 bis 4 dargestellt und beschrieben ist, wobei die Zusatzentlüftungsleitung 160B bevorzugt ausgestaltet ist. Für gleiche Merkmale (wie in den Fig. 2 bis 4) werden gleiche Bezugszeichen verwendet.

Von den in den Fig. 2 bis 4 beschriebenen Ausführungsformen des Druckluftversorgungssystems unterscheidet sich das in der Fig. 5 gezeigte Druckluftversorgungssystem dadurch, dass in der gedrosselten Zusatzentlüftungsleitung 160B, wobei die Zusatzentlüftungsleitung 160B mittels einer Zusatzdrossel 160C gedrosselt wird, ein weiteres Zusatzentlüftungsventil 64 vorgesehen ist. Darüberhinaus sind die in der Pneumatikhauptleitung 60 angeordnete erste Drossel 62 und das pneumatische Rückschlagventil 63.1 parallel geschaltet.

Das Zusatzentlüftungsventil 64 ist in Form eines 3/2-Wegeventils gebildet und weist insgesamt drei Anschlüsse, nämlich einen ersten 64X, zweiten 64Y und dritten Anschluss 64Z auf, wobei der dritte Anschluss 64Z als ein Relaiskolbensteueranschluss für das Zusatzentlüftungsventil 64 gebildet ist.

Das Zusatzentlüftungsventil 64 umfasst einem ersten Schaltzustand, der zwischen dem ersten Anschluss 64X und dem zweiten Anschluss 64Y geschlossen ist und einem zweiten Schaltzustand, der zwischen dem ersten Anschluss 64X und dem zweiten Anschluss 64Y zum Entlüftungsanschluss 3 und/oder dem weiteren Entlüftungsanschluss 3A geöffnet ist.

Wird nun die Zusatzentlüftungsleitung 160B mit Druck beaufschlagt, beispielswiese durch das Überführen des Steuerventils 74 vom ersten, stromlos, geschlossenen Schaltzustand in den zweiten, bestromten, geöffneten Schaltzustand, so wird neben dem Steueranschluss 73 Z des Entlüftungsventils 73 zusätzlich der Relaiskolben 65 des Zusatzentlüftungsventils 64 mit Druck beaufschlagt, so dass das Zusatzentlüftungsventil 64 vom ersten, geschlossenen Schaltzustand in den zweiten, geöffneten Schaltzustand überführt, bei dem die gedrosselte Zusatzentlüftungsleitung 160B mit dem Entlüftungsanschluss 3 und/oder einen weiteren Entlüftungsanschluss 3A pneumatisch verbunden ist.

Darüberhinaus ist die Funktionsweise des in der Fig. 5 gezeigten Druckluftversorgungssystems im Wesentlichen ähnlich zu den in den Fig. 2 bis 4 dargestellten Ausführungsformen eines Druckluftversorgungssystems.

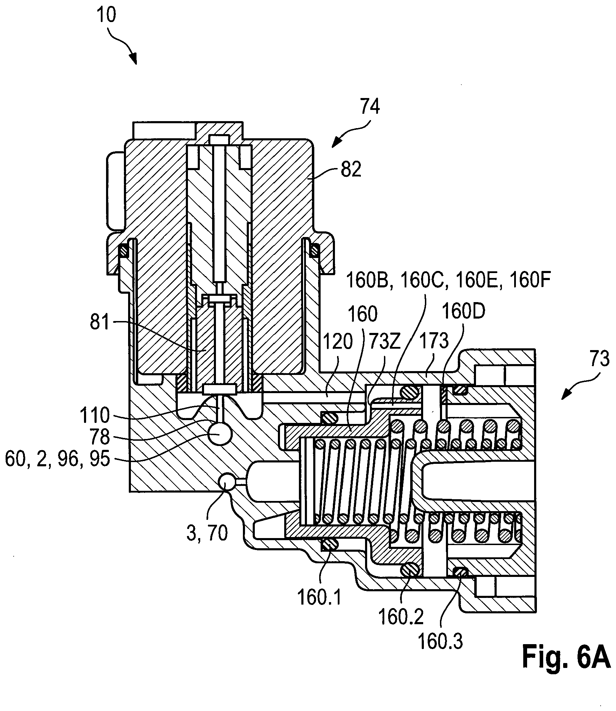

Fig. 6A zeigt eine mögliche Ausführungsform einer Druckluftversorgungsanlage 10 zur Steuerung einer Pneumatikanlage 90 (nicht dargestellt). Die Pneumatikanlage 90 ist beispielsweise an der Pneumatikhauptleitung 60 über der Anschluss 2 angeschlossen.

Vorliegend ist eine Anordnung mit einem Steuerventil 74, welches in Form eines 2/2-Wegeventils und einem Entlüftungsventil 73, das in Form eines 3/2-Wegeventils gebildet ist, gezeigt. Beide Ventile, nämlich Steuerventil 74 und Entlüftungsventil 73, sind in einem gemeinsamen (Ventil-)Gehäuse 173 angeordnet und sind vorliegend im geschlossenen Schaltzustand dargestellt.

Das Entlüftungsventil 73 ist als ein steuerbares Relaisventil mit einem Relaiskolben 160 gebildet. Das Steuerventil 74 kann mit einem über eine elektronische Steuerleitung (nicht dargestellt) an eine Spule 82 des Steuerventils 74 angesteuert werden, so dass eine Magnetkraft auf einen Kolben 81 des Steuerventils 74 wirkt und den Kolben 81 nach oben bewegt. Bei Ansteuerung kann das Steuerventil 74 von der gezeigten, stromlos geschlossenen Stellung (d. h. Kolben 81 in der unteren Position) in eine pneumatisch geöffnete Stellung (d. h. Kolben 81 in der oberen Position) überführt werden, in der ein über eine pneumatische Steuerleitung 110 - hier am Haupt-Zweiganschluss 78 aus der Pneumatikhauptleitung 60 - abgeleiteter Druck zur pneumatischen Steuerung des steuerbaren Entlüftungsventil 73 an das Relaisventil über eine Steuerrelaisleitung 120 weitergegeben wird.

Die Steuerrelaisleitung 120 verbindet hierbei das Steuerventil 74 mit Entlüftungsventil 73, insbesondere mit dem Steueranschluss 73Z und dem Relaiskolben 160 des Entlüftungsventils 73.

Weiterhin ist eine gedrosselte Zusatzentlüftungsleitung 160B vorgesehen, wobei die Zusatzentlüftungsleitung 160B mittels einer Drossel 160C (nicht dargestellt) gebildet ist. Bei der Drossel 160C kann es sich beispielsweise um eine lokale Verengung in der Zusatzentlüftungsleitung 160B, insbesondere eine lokale Verengung des Strömungsquerschnittes der Zusatzentlüftungsleitung 160B handeln. Hierdurch wird der Druck in der durchfließenden Druckluft vermindert. In einer nicht gezeigten Ausgestaltung kann die zusätzliche Drossel 160C auch als eine regelbare Drossel ausgebildet sein. Bevorzugt weist die Drossel 160C eine lokale Verengung mit einem maximalen Durchmesser von 1 Millimeter auf.

Mittels der gedrosselten Zusatzentlüftungsleitung 160B ist die pneumatische Steuerrelaisleitung 120 mit der Entlüftungsleitung 70 pneumatisch verbunden, so dass die pneumatische Steuerrelaisleitung 120 mittels der Zusatzentlüftungsleitung 160B mit dem Entlüftungsanschluss 3 und/oder einen weiteren Entlüftungsanschluss 3A (nicht dargestellt) pneumatisch verbunden ist.

Die Zusatzentlüftungsleitung 160B ist vorliegend als eine Aussparung 160E im Relaiskolben 160 des Entlüftungsventils 73 gebildet. In einer anderen Ausführungsform kann die Zusatzentlüftungsleitung auch durch eine Aussparung im Entlüftungsventilgehäuse 173 des Entlüftungsventiles 73 gebildet sein, beispielsweise in Form eines Schlitzes 160G, wobei sich der Schlitz 160G bevorzugt über einen Teilbereich des Ventilhubes des Relaiskolbens 160 des Entlüftungsventils 73 erstreckt.

In einer anderen Ausgestaltung ist die Aussparung 160E in Form einer Bohrung 160F durch den Relaiskolben 160 des Entlüftungsventiles 73 gebildet. Hierbei ist dann eine Dichtung 160D vorgesehen, welche die Bohrung 160F im offenen Schaltzustand des Entlüftungsventils 73 abdichtet und verschließt.

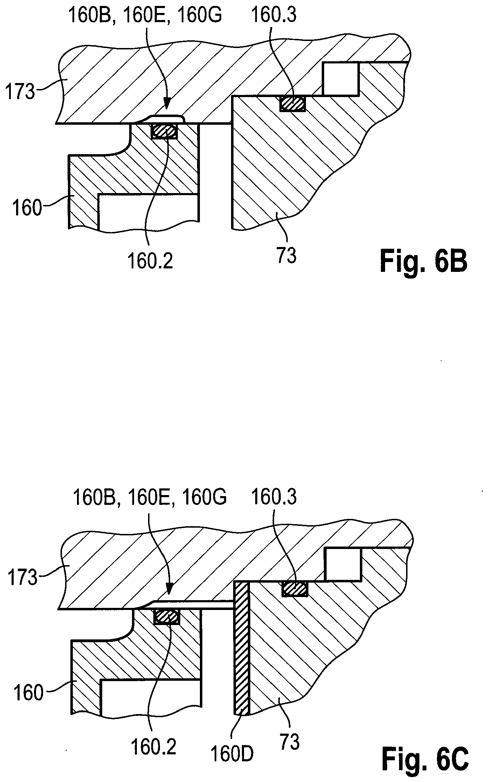

Die Fig. 6B und 6C zeigen zwei schematische Darstellungen eines Teilbereiches von möglichen Ausführungsformen für eine Ventilanordnung, insbesondere ein Teilbereich eines Entlüftungsventils 73.

Bezugnehmend auf die Fig. 6B und 6C zeigen beide Ausführungsbeispiele einen Teilbereich eines Entlüftungsventils 73, wie es beispielhaft in der Fig. 6A dargestellt und beschrieben ist. Das Entlüftungsventils 73 ist mit einem Entlüftungsventilgehäuse 173, einer Zusatzentlüftungsleitung 160B, einem Relaiskolben 160 sowie entsprechenden (O-Ring-)Dichtungen 160.2, 160.3 gebildet. Die (gedrosselte) Zusatzentlüftungsleitung 160B ist vorliegend als eine Aussparung 160 E, insbesondere als ein Schlitz 160G, im Entlüftungsventilgehäuse 173 des Entlüftungsventiles 73 gebildet. Insbesondere erstreckt sich der Schlitz 160G im Entlüftungsventilgehäuse 173 entweder über einen Teilbereich (Fig. 6B) des Ventilhubes des Relaiskolbens 160 oder über den gesamten Bereich (Fig. 6C) des Ventilhubes des Relaiskolbens 160 des Entlüftungsventils 73.

Das in der Fig. 6C gezeigte Ausführungsbeispiel umfasst zusätzlich eine Dichtung 160D zum Abdichten der Zusatzentlüftungsleitung 160B, wenn der Relaiskolbens 160 des Entlüftungsventils 73 um den vollen Ventilhub verlagert wird.

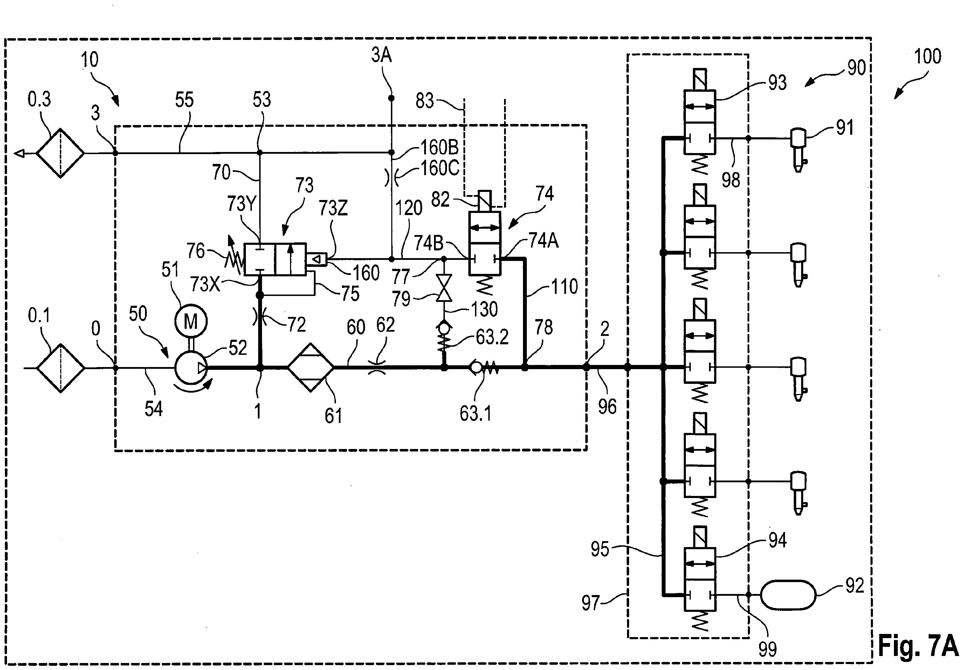

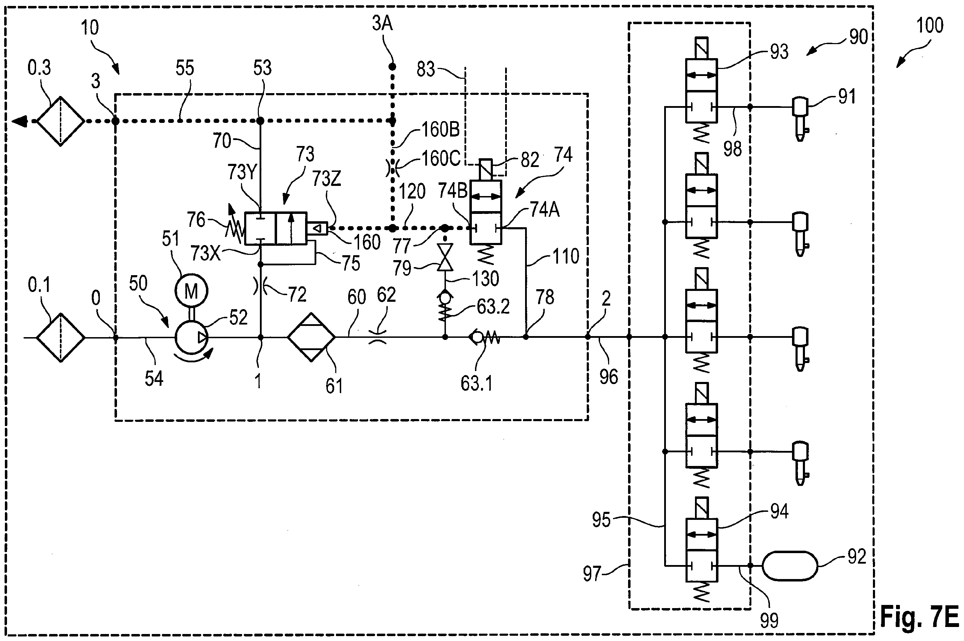

Die Fig. 7A bis Fig. 7E zeigen einen möglichen Ablauf für ein Verfahren zum Betreiben eines Druckluftversorgungssystems wie es beispielsweise in der Fig. 4 dargestellt ist, wobei die Fig. 7A den Begin des Verfahrens, insbesondere das Befüllen der Pneumatikanlage 90, und die Fig. 7E das Ende des Verfahrens, insbesondere die entlüftete Pneumatikanlage 90, zeigt. In den Fig. 7A bis Fig. 7E sind jeweils solche Leitungen fett hervorgehoben, die mit Druckluft befüllt sind.

Wie oben beschrieben ist in der Fig. 7A zunächst das Befüllen der Pneumatikanlage 90 über die Pneumatikhauptleitung 60 dargestellt.

Hierbei wird Luft über die Luftzuführung 0, einem der Luftzuführung 0 vorgeordneten Luftfilter 0.1 und über eine Ansaugleitung 54, einem der Luftzuführung 0 nachgeordneten und mittels eines Motors 51 (M) angetriebenen Luftverdichter 50 verdichtet und als Druckluft (fett) dem Druckluftversorgungssystem zugegeführt. Die Druckluft wird in dem Trockner 61 gereinigt, insbesondere getrocknet, und dann über die Pneumatikhauptleitung 60, das erste Trennventil 63.1 und den Druckluftanschluss 2 an die Pneumatikanlage 90 weitergeleitet. In der Pneumatikanlage 90 wird die Druckluft über die weitere Pneumatikleitung 96 und die Galerie 95 verteilt, wobei im vorliegenden Fall alle Magnetventile 93, 94 der Bälge 91 und des Speichers 92 geschlossen sind.

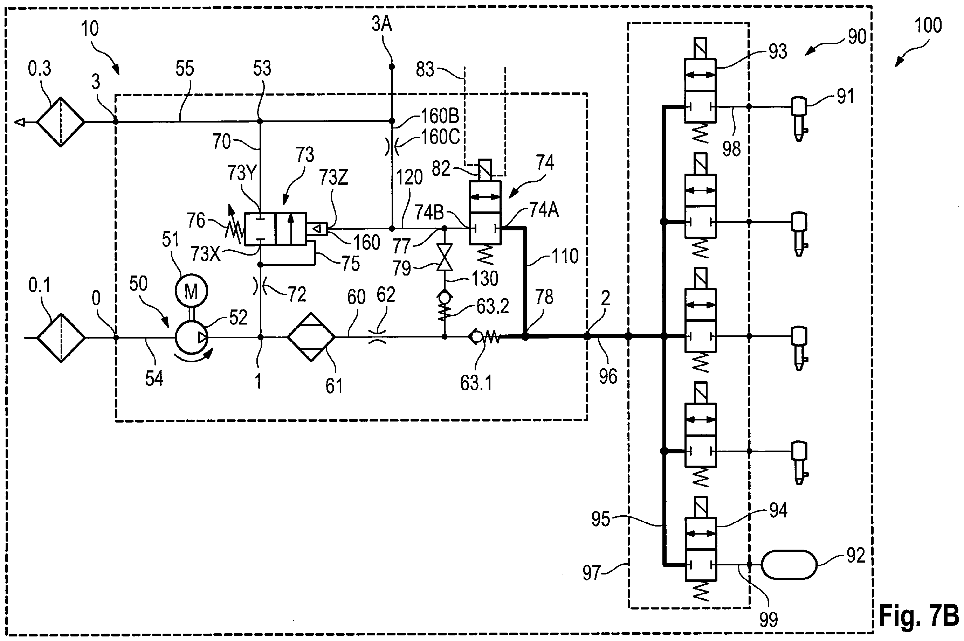

In der Fig. 7B ist die mit Druckluft (fett) befüllte Pneumatikanlage 90 dargestellt. Das Befüllen der Pneumatikanlage 90 ist soweit angeschlossen, so dass eine weiterer Versorgung/Beaufschlagung mit Druckluft über die Luftzuführung 0, die Ansaugleitung 54 und den Verdichter/Kompressor nicht weiter notwendig ist. Das erste Trennventil 63.1 und das geschlossenen Steuerventil 74 sorgen dafür, dass die Druckluft nicht aus der Pneumatikanlage 90 entweichen kann. Hierbei ist das 2/2-Wege-Steuerventil 74 in einem ersten, stromlos, geschlossenen Schaltzustand geschaltet, der zwischen dem Steuerdrucknehmeranschluss 74A und dem Steuerdruckgeberanschluss 74B geschlossen ist, so dass insbesondere die Steuerrelaisleitung 120 vom Druck/der Druckluft in der Pneumatikhauptleitung 60 getrennt ist.

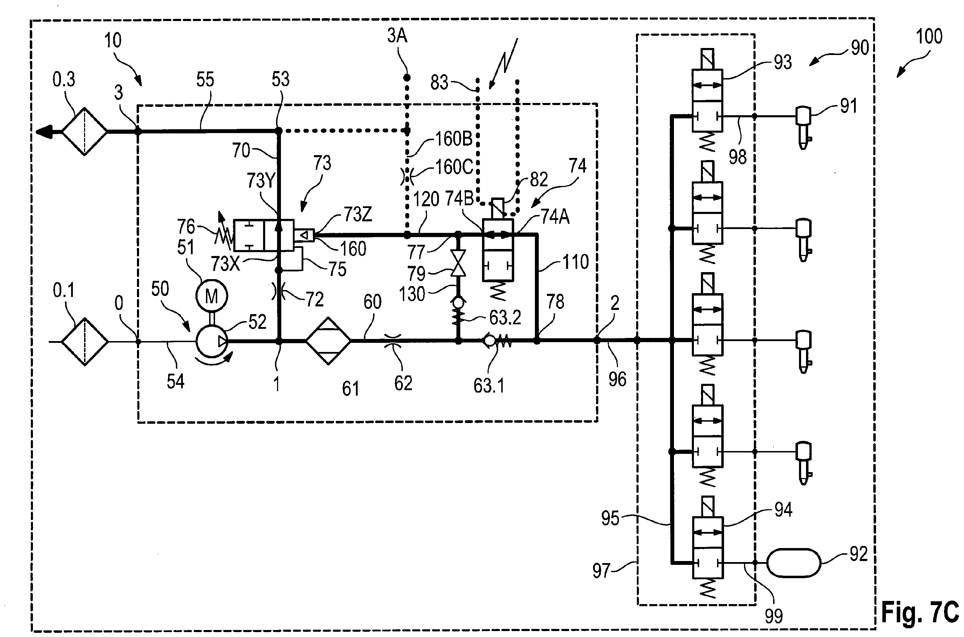

Fig. 7C zeigt den Beginn des Entlüftungsprozesses/Entlüftens der Pneumatikanlage 90, wobei das 2/2-Wegeventil von dem ersten, stromlos, geschlossenen Schaltzustand in den zweiten Schaltzustand geschaltet wird, der zwischen dem Steuerdrucknehmeranschluss 74A und dem Steuerdruckgeberanschluss 74B zum Steueranschluss 73Z des Entlüftungsventils 73 geöffnet ist, so dass die Steuerrelaisleitung 120 mit Druck beaufschlagt wird. Hierfür wird das Steuerventil 74 mit einem über eine elektronische Steuerleitung 83 übermittelten Steuersignal (dargestellt als Blitz) in Form eines Spannungs- und/oder Stromsignales an eine Spule des Steuerventiles 74 angesteuert, so dass das Steuerventil 74 vom ersten, geschlossenen Schaltzustand in den zweiten geöffneten Schaltzustand überführt wird.

Nach dem Öffnen des Steuerventiles 74 wird die Steuerrelaisleitung 120 mit Druckluft befüllt und so der Steueranschluss 73Z des Entlüftungsventils 73 mit Druck beaufschlagt wird, so dass über eine Betätigung des Relaiskolbens 160 das Entlüftungsventil 73 von dem ersten geschlossenen Schaltzustand in den zweiten geöffneten Schaltzustand überführt wird.

Nach dem Öffnen des Entlüftungsventils 73 wird über den Zweiganschluss 77, die Steuerrelaisentlüftungsleitung 130, das Absperrventil 79 oder Drossel, das Rückschlagventil 63.2, die Pneumatikhauptleitung 60, die erste Drossel 62, den Trockner 61, die zweite Drossel 72 und das (geöffnete) Entlüftungsventil 73 die Druckluft aus der Pneumatikanlage 90 zum Entlüftungsanschluss 3 geführt und entlüftet.

Gleichzeitig hierzu findet auch eine Entlüftung über die Zusatzentlüftungsleitung 160B zum Entlüftungsanschluss 3 und/oder zu einen weiteren Entlüftungsanschluss 3A statt, wobei die Drossel 160C in der Zusatzentlüftungsleitung 160B dafür sorgt, dass hierüber nur eine gedrosselte Entlüftung (gepunktete Linie) stattfindet und der Relaiskolben 160 des Entlüftungsventils 73 weiter mit Druck beaufschlagt wird und das Entlüftungsventil 73 weiter im zweiten, geöffneten Schaltzustand bleibt.

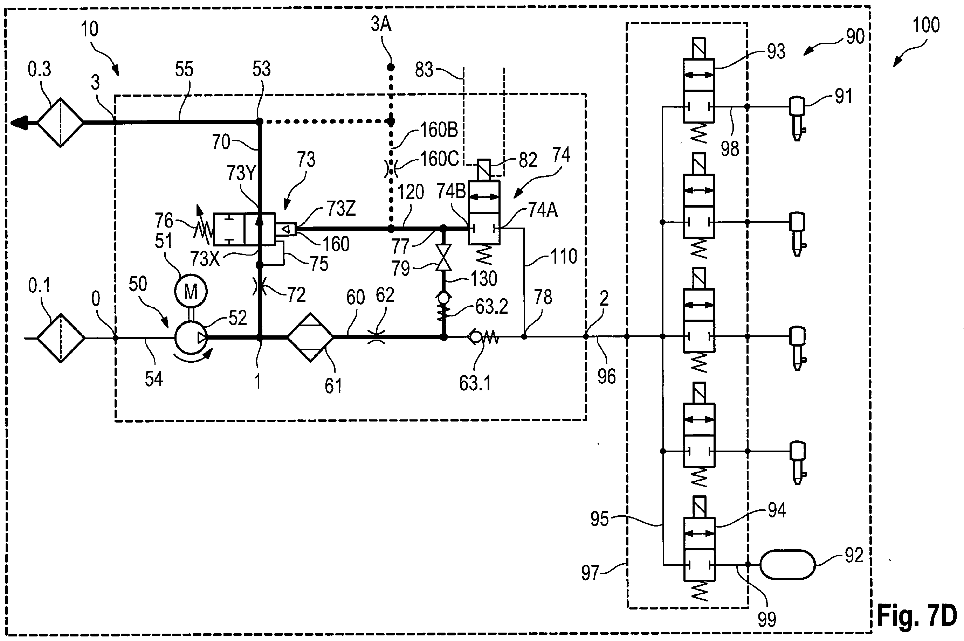

Fig. 7D zeigt das Ende des Entlüftungsprozesses/Entlüftens der Pneumatikanlage 90, wobei die Pneumatikanlage 90 vollständig entlüftet ist, und das Steuerventil 74, in Form eines 2/2-Wegeventil, wieder vom zweiten, bestromten, geöffneten Schaltzustand in den ersten, stromlosen, geschlossenen Schaltzustand überführt wird, der zwischen dem Steuerdrucknehmeranschluss 74A und dem Steuerdruckgeberanschluss 74B geschlossen ist. Der Druck in der Steuerleitung 160 reicht jedoch weiter aus um den Relaiskolben 160 des Entlüftungsventils 73 zu betätigen und das Entlüftungsventil 73 weiter im zweiten, geöffneten Schaltzustand zu halten.

Sinkt der Druck in der Steuerrelaisleitung 120 - über die gedrosselte Entlüftung durch die Zusatzentlüftungsleitung 160B zum Entlüftungsanschluss 3 und/oder dem weiteren Entlüftungsanschluss 3A - weiter ab, so wird auch das Entlüftungsventil vom zweiten, offenen in den ersten, geschlossenen Schaltzustand (zurück) überführt. Anschließend kann die Restdruckluft (gepunktete Linie) über die gedrosselten Zusatzentlüftungsleitung 160B zu dem Entlüftungsanschluss 3 und/oder den weiteren Entlüftungsanschluss 3A entweichen (vgl. Fig. 7E).

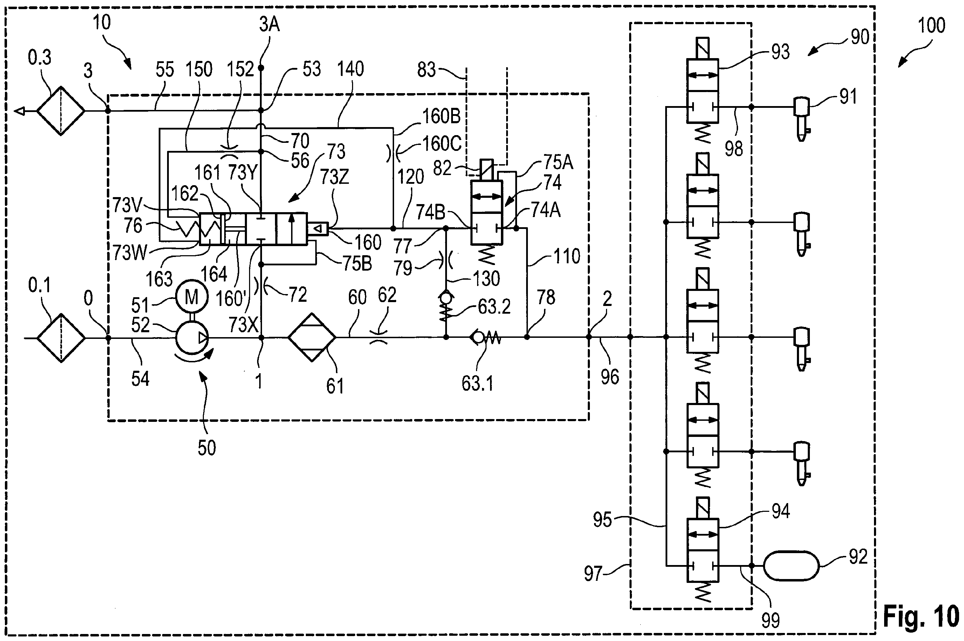

Die im Folgenden erläuterten Ausführungsformen der Fig. 8 bis Fig. 10 erläutern beispielhaft weitere Vorteile, Merkmale und Einzelheiten der weiteren Variante der Erfindung, insbesondere wie diese in den Ansprüchen 13 bis 20 für eine Druckluftversorgungsanlage, ein Druckluftversorgungssystem und ein Verfahren zum Betreiben eines Druckluftversorgungssystem erläutert sind. Die Ausführungsform der Fig. 8 der weiteren Variante der Erfindung ergänzt insbesondere die Ausführungsform der Fig. 2. Die Ausführungsform der Fig. 9 der weiteren Variante der Erfindung ergänzt insbesondere die Ausführungsform der Fig. 3. Die Ausführungsform der Fig. 10 der weiteren Variante der Erfindung ergänzt insbesondere die Ausführungsform der Fig. 4.

Im Folgenden wird diesbezüglich auf die Detailbeschreibung der Fig. 2, Fig. 3 und Fig. 4 verwiesen und insoweit werden in der Fig. 2, Fig. 3 und Fig. 4 und in den Fig. 8, Fig. 9 und Fig. 10 identische oder ähnliche Merkmale oder Merkmale identischer oder ähnlicher Funktion mit gleichem Bezugszeichen gekennzeichnet und beschrieben sowie im Übrigen auf die Beschreibung der Fig. 2, Fig. 3 und Fig. 4 verwiesen - im Folgenden wird insbesondere auf die Unterschiede und Ergänzungen dieser weiteren Variante der Erfindung in der Fig. 8, Fig. 9 und Fig. 10 sowie die damit erreichten Vorteile Bezug genommen. Bei allen Ausführungsformen kann ein Druckanstieg durch eine Volumenverringerung in einem Kolbenrückraum beim Schalten als dämpfendes Element gezielt genutzt bzw. mittels Volumenverringerung verstärkt werden.

Die Ausführungsform der Fig. 8 zeigt nun, dass die Zusatzentlüftungsleitung 160B, wie sie auch in der Ausführungsform der Fig. 2 bezeichnet ist, als eine Rückkoppelleitung 140 ausgebildet ist und somit auch als Zusatzentlüftungsleitung 160B an die pneumatische Steuerrelaisleitung 120 anschließt. Die Rückkoppelleitung 140 schließt (im Unterschied zur Zusatzentlüftungsleitung 160B der Fig. 2) nun des Weiteren an einen zweiten Steueranschluss 73W des Entlüftungsventils 73 an. Dieser weitere zweite Steueranschluss 73W des Entlüftungsventils 73 ist in der in Fig. 8 ersichtlichen Weise mit einem Entlüftungsanschluss 73V des Entlüftungsventils 73 pneumatisch verbunden. An den Entlüftungsanschluss 73V des Entlüftungsventils 73 wiederum schließt eine noch weitere Entlüftungsleitung 150 an. Die weitere Entlüftungsleitung 150 ist mit dem Entlüftungsanschluss 3 und dem weiteren Entlüftungsanschluss 3A pneumatisch verbunden. Dazu ist die weitere Entlüftungsleitung 150 mit einem noch weiteren zweiten Entlüftungszweiganschluss 56 an die Entlüftungsleitung 70 angeschlossen, nämlich zwischen dem Entlüftungsventil 73 und dem ersten Entlüftungszweiganschluss 53. Wie auch in der Ausführungsform der Fig. 10 wird auch in der Ausführungsform der Fig. 8 der Entlüftungsrückraum 163 am Relaiskolbenfortsatz 160' des Relaiskolbens 160 über den Entlüftungsanschluss 73V des Entlüftungsventils 73 entlüftet.

Die noch weitere Entlüftungsleitung 150 --konkret zur Entlüftung des Entlüftungsrückraums 163 am Relaiskolbenfortsatz 160' des Relaiskolbens 160, also der Entlüftungsrückraum 163 zwischen dem Steueranschluss 73W und dem Entlüftungsanschluss 73V am Relaiskolbenfortsatz 160' des Entlüftungsventils 73 bei Betätigung des Relaiskolbens 160-- ist hinsichtlich des Druckluftdurchlasses gedrosselt mittels einer hier als dritte Drossel 152 bezeichneten Drossel. Aufgrund des dadurch definierten Druckluftdurchlasses aus dem Entlüftungsrückraum 163 am Relaiskolbenfortsatz 160' wird auch eine Bewegung eines Relaiskolbens 160 des Entlüftungsventils 73 bei Betätigung gedämpft.
Die oben genannte Zusatzentlüftungsleitung 160B als Rückkoppelleitung 140 ist also mit einem Entlüftungsrückraum 163 des Entlüftungsventils 73 verbunden, das somit im Unterschied zum Entlüftungsventil 73 der Ausführungsform der Fig. 2 weitergebildet ist. Über den Entlüftungsrückraum 163 ist der zweite Steueranschluss 73W pneumatisch mit dem Entlüftungsanschluss 73V des Entlüftungsventils 73 verbunden. Dadurch kann der zweite Steueranschluss 73W zur Aufnahme eines zweiten Steuerteildrucks am Relaiskolbenfortsatz 160' ausgebildet sein, der zusätzlich zu einem ersten Steuerteildruck des ersten Steueranschlusses 73Z wirkt. Der zweite Steueranschluss 73W am Relaiskolbenfortsatz 160' ist also als ein Gegensteueranschluss zur Aufnahme des zweiten Steuerteildrucks ausgebildet, der zusätzlich zu dem ersten Steuerteildruck des ersten Steueranschlusses 73Z wirkt. Dieser Steuerteildruck ist insbesondere zeitlich begrenzt und beaufschlagt den Relaiskolbenfortsatz 160' entgegengerichtet zum ersten Steuerteildruck des ersten Steueranschlusses 73Z am Relaiskolben 160. Anders formuliert liegt der Steuerdruck, jedenfalls aber ein von diesem abgeleiteter Steuerdruck an der ersten und zweiten Steuerfläche 161, 162 des Relaiskolbenfortsatzes 160' --und damit auch mit Wirkung auf den Relaiskolben 160-- an. Es kann dazu die dritte Drossel 152 in der weiteren Entlüftungsleitung 150 zum Entlüftungsrückraum 163 mit vergleichsweise kleiner Nennweite NW3 ausgelegt sein; u.a. kann dadurch eine Bewegung eines Relaiskolbens 160 gedämpft werden.

Konkret ist dazu vorliegend das Entlüftungsventil 73 mittels einem mit Steuerdruck druckbeaufschlagbaren Relaiskolben 160 zur Schaltung des Entlüftungsventils 73 ausgebildet, insbesondere in einem geöffneten oder geschlossenen Zustand, insbesondere ist --wie auch bereits bei der Ausführungsform der Fig. 2-- das Entlüftungsventil 73 als ein pneumatisch angesteuertes 2/2-Wegeventil gebildet. Der Relaiskolben 160 weist nun dazu am Relaiskolbenfortsatz 160' eine einer Steuerkammer 164 zugewandte erste Steuerfläche 161 und eine dem vorgenannten Entlüftungsrückraum 163 zugewandte zweite Steuerfläche 162 auf. Vorliegend ist die erste und die zweite Steuerfläche 161, 162 zur gegeneinander gerichteten Aufnahme des ersten Steuerteildrucks und des zweiten Steuerteildrucks angeordnet, wobei der erste und zweite Steuerteildruck aus der Relaiskolbensteuerleitung 120 abgeleitet ist.

Damit erlaubt es diese Konstruktion des Relaiskolbens 160 mit dem Relaiskolbenfortsatz 160' in dem Entlüftungsrückraum 163 und unter Zusammenwirkung mit der noch weiteren Entlüftungsleitung 150 zur Entlüftung desselben, im Entlüftungsventil bei Betätigung des Relaiskolbenfortsatzes 160' und des Relaiskolbens 160, dass die noch weitere Entlüftungsleitung 150 hinsichtlich des Druckluftdurchlasses mittels einer dritten Drossel 152 gedrosselt ist. Zusätzlich oder alternativ ist somit aufgrund des dadurch definierten Druckluftdurchlasses aus dem Entlüftungsrückraum 163 auch eine Bewegung des Relaiskolbens 160 bei Betätigung auch des Relaiskolbenfortsatzes 160' gedämpft.

Fig. 10 zeigt im Wesentlichen genau diese Funktionalität des Entlüftungsventils 73 in Kombination mit der Druckluftversorgungsanlage 10 und der Pneumatikanlage 90 im Rahmen eines Druckluftversorgungssystems 100. In beiden Fällen der Fig. 8 und Fig. 10 kann der weitere zweite Entlüftungs-Zweiganschluss 56 der weiteren Entlüftungsleitung 150 nicht in der Entlüftungsleitung 70 sondern (nicht gezeigt) in der Ablassleitung 55 angeschlossen sein. Beide Möglichkeiten eines Anschlusses des zweiten Entlüftungs-Zweiganschlusses 56 --in der Ablassleitung 55 oder der Entlüftungsleitung 70-sind jedoch möglich je nach Strömungswiderstand und Auslegungsbedürfnis der dritten Drossel 152 mit Nennweite NW3.

Das steuerbare Entlüftungsventil 73 ist vorliegend -wie auch in Fig. 8 und Fig. 9 (in Fig. 2 bis Fig. 5 ist dieses mit dem Bezugszeichen 75 bezeichnet)-- zusätzlich mit einer Druckbegrenzung 75B versehen. Die Druckbegrenzung 75B greift über eine weitere pneumatische Steuerleitung vor dem Entlüftungsventil 73 --konkret zwischen zweiter Drossel 72 und Entlüftungsventil 73-- einen Druck ab, welcher bei Übersteigen eines Schwelldrucks den Kolben des Entlüftungsventils 73 gegen die Kraft einer einstellbaren Feder 76 vom Ventilsitz hebt - also das steuerbare Entlüftungsventil 73 auch ohne Ansteuerung über das Steuerventil 74 in die geöffnete Stellung eines zweiten Schaltzustands bringt. Auf diese Weise wird vermieden, dass ein ungewollt zu hoher Druck im pneumatischen System 100 entsteht.

Ganz analog ist auch das Steuerventil 74 der Fig. 8 und Fig. 9 und Fig. 10 mit einer Druckbegrenzung 75A versehen. Außerdem ist in den Fig. 8, Fig. 9 und Fig. 10 das Absperrventil vorteilhaft durch eine Drossel 79 ersetzt, da hier der Hauptluftstrom beim Entlüften bzw. Regenerieren des Lufttrockners 61 hindurchgeht. Das zweite Rückschlagventil 63.2 ist vorteilhaft ein Lippenventil mit Absperrfunktion; ein dort aufgebauter Staudruck kann vorteilhaft auch beim Füllen eines Vorsteuervolumens im Bereich der Steuerrelaisleitung 120 zum Steueranschluss 73Z während der Entlüftung helfen.

Fig. 9 zeigt eine bevorzugte abgewandelte Ausführungsform mit der vorgenannten Ergänzung der Variante der Erfindung zur Ausführungsform der Fig. 3. Auch hier wird auf die Beschreibung zunächst der Fig. 3 hingewiesen und im Folgenden ergänzend erläutert. Hier schließt allerdings eine separate Rückkoppelleitung 140 --die also mit einem Entlüftungsrückraum 163 des Entlüftungsventils 73 über einen zweiten Steueranschluss 73W verbunden ist-- an die Zusatzentlüftungsleitung 160B' hinter der Zusatzdrossel 160C an, nämlich noch bevor diese Zusatzentlüftungsleitung 160B' selbst an die Entlüftungsleitung 70 am weiteren zweiten Entlüftungs-Zweiganschluss 56 anschließt. Bei allen Ausführungsformen der Fig. 8, Fig. 9 und Fig.10 öffnet der Relaiskolben 160 des Entlüftungsventils 73 aufgrund der auf den Relaiskolbenfortsatz 160' wirkenden Kraft den Lufttrockner 61 langsamer und verzögert den Druckabbau derart, dass ein Entlüftungsknall deutlich gedämpft bzw. reduziert wird; (z.B. wurden -7 dBA im Lufttrockner mit einem Pulsgenerator bei 10 bar gemessen).

Anders als in der Ausführungsform der Fig. 10 und Fig. 8 wird in der Ausführungsform der Fig. 9 der Entlüftungsrückraum 163 am Relaiskolbenfortsatz 160' des Relaiskolbens 160 wieder über den zweiten Steueranschluss 73W des Entlüftungsventils 73 entlüftet; nämlich über die Rückkoppelleitung 140 , die dritte Drossel 152, dann die Entlüftungsleitung 70 und schließlich über die Ablassleitung 55 zum Entlüftungsanschluss 3.

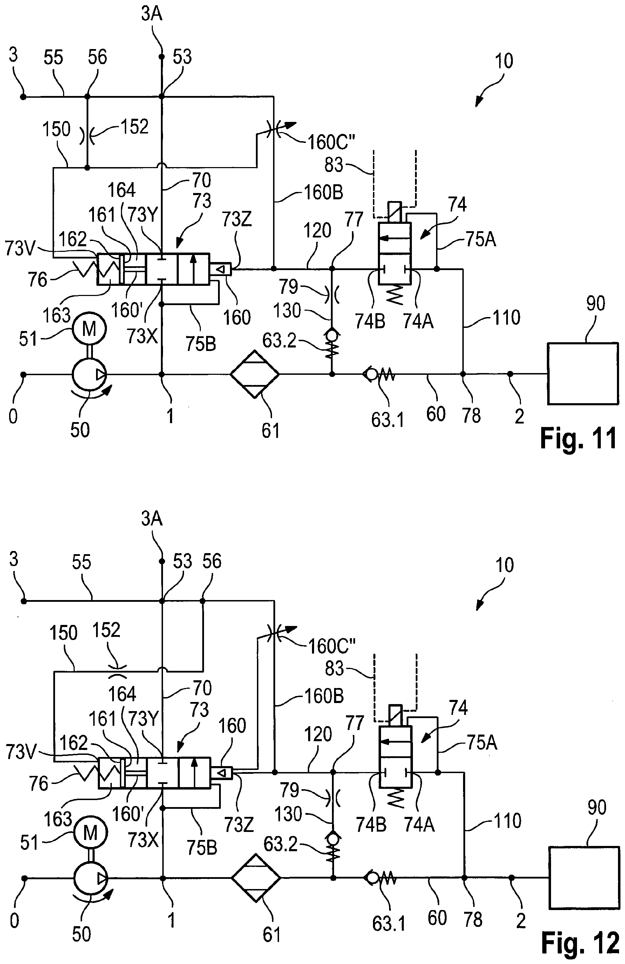

Bei allen vorgenannten Ausführungsformen ergibt sich --insbesondere für den Vorgang einer Entlüftung wie er in Fig. 7C veranschaulicht ist und wie er sich in Fig. 10 analog darstellen lässt-- eine besonderer Zeitablauf bei der Bewegung des Relaiskolbens 160, der sich aufgrund eines sich nach obiger Beschreibung praktisch entwickelnden Luftpolsters ergibt, was beim Öffnen des Entlüftungsventils 73 hinter dem Relaiskolben 160, also am Relaiskolbenfortsatz 160' entsteht. Für diesen Vorgang vorteilhaft sind insbesondere die Ausführungsformen der Fig. 11 und Fig. 12 mit einer Abwandlung zur Fig. 8 und Fig. 10 dargestellt, welche mit einigen Abwandlungen zu vorgenannten Ausführungsformen diesen Vorgang eines sich nach obiger Beschreibung praktisch entwickelnden Luftpolsters unterstützen und die im Folgenden beide näher beschrieben sind. Unterschiede zwischen den Abwandlungen der Fig. 11 und Fig. 12 bestehen insofern nur betreffend dem Anschließen der Zusatzdrossel 160C" entweder an den Entlüftungsanschluss 73V (Fig.11) oder den Steueranschluss 73Z (Fig.12) des Entlüftungsventils 73.

Insbesondere bei diesen Ausführungsformen der Fig. 11 und Fig. 12 schließt der Relaiskolben 160 den Bypass der weiteren Entlüftungsleitung 150 nämlich nahezu dicht ab, wenn er am Anschlag ankommt; d.h. er verschließt den Entlüftungsanschluss 73V und/oder den zweiten Steueranschluss 73W. Die Zusatzdrossel 160C" ist hier insofern eher eine Art Stelldrossel, deren effektive Durchlass-Nennweite vom Relaiskolben 160 mit Relaiskolbenfortsatz 160' gesteuert wird. Ganz dicht ist die Zusatzdrossel 160C" allerdings nicht, damit der Vorsteuerraum im Bereich des Steueranschlusses 73Z und der Steuerrelaisleitung 120 bzw. auch der Entlüftungsrückraum 163 über den Bypass der Entlüftungsleitung 160B, 160B' mit der Zusatzdrossel 160C" entlüftet werden kann, wenn der Magnet für das Steuerventil 74 wieder schließt bzw. das Steuerventil 74 geschlossen ist.

Der Zeitablauf ergibt sich damit insbesondere für die Ausführungsformen der Fig. 11 und Fig. 12 in etwa wie folgt: Wenn der Magnet des Entlüftungsventils 74 schließt und diese quasi Initialentlüftung per Leckage anhält, dann lässt der Druck unter dem Relaiskolben 160 am Relaiskolbenfortsatz 160' bzw. am Vorsteuerraum im Bereich des Steueranschlusses 73Z und der Steuerrelaisleitung 120 nach. Somit werden die Leckageverluste an der nahezu geschlossenen Zusatzdrossel 160C" verringert. Dann fällt der Relaiskolben 160 per Federkraft der Ventilfeder 76 zuerst langsam ab. Öffnet die Zusatzdrossel 160C" weiter, beschleunigt sich der Vorgang bis zur vollständigen Entlüftung von Vorsteuerraum im Bereich des Steueranschlusses 73Z und der Steuerrelaisleitung 120 und der Galerie 95 und zuletzt dem Rückraum 163, durch den die restliche Luft über die Zusatzentlüftungsleitung 160B abfließt.

Im Punkt des ersten Entlüftungszweiganschlusses 53 treffen sich die Luftströme wie gehabt. Alternativ könnte auch dort noch die dritte Drossel 152 angeordnet sein. Im Übrigen ist die Reihenfolge der Entlüftungszweiganschlüsse 53 und 56 in der Zusatzentlüftungsleitung 160B je nach Bedarf variierbar. Die Abstimmung der dritten Drossel 152 und der Zusatzdrossel 160C" macht die pneumatische Dämpfung aus, die Querschnittsänderung in der Zusatzdrossel 160C" eher den genannten Zeitablauf. Das Luftpolster könnte man wegen der Gegenkraft auch als Arbeitszylinder verstehen, der die Ventilfeder 76 beim Öffnen unterstützt, dann aber über die dritte Drossel 152 schnell die Kraft abbaut. Die Ventilfeder 76 ist dann alleine für das Schließen zuständig. Analog lässt sich das oben erläuterte Prinzip der Stelldrossel auch für die Zusatzdrossel 160C' in der Ausführungsform der Fig. 9 umsetzen.

### Bezugszeichenliste

- 0.1: Luftfilter
- 0.3: Filter/Schalldämpfer
- 0: Luftzuführung
- 1: Druckluftzuführung
- 2: Druckluftanschluss
- 3: Entlüftungsanschluss
- 3A: weiterer Entlüftungsanschluss
- 10: Druckluftversorgungsanlage
- 50: Luftverdichters
- 51: Motor
- 52: Kompressor des Luftverdichters
- 53: erster Entlüftungszweiganschluss
- 54: Ansaugleitung
- 55: Ablassleitung
- 56: weiterer zweiter Entlüftungszweiganschluss
- 60: Pneumatikhauptleitung
- 61: Lufttrockner
- 62: Erste Drossel
- 63.1: Erstes Rückschlagventil
- 63.2: Zweites Rückschlagventil
- 64: Zusatzentlüftungsventil
- 64X: erster Anschluss des Zusatzentlüftungsventils
- 64Y: zweiter Anschluss des Zusatzentlüftungsventils
- 64Z: Steueranschluss des Zusatzentlüftungsventils
- 65: Relaiskolben
- 70: Entlüftungsleitung
- 72: zweite Drossel
- 73: Entlüftungsventil
- 73A: erster Entlüftungsventilanschluss für Zusatzsteuerrelaisleitung
- 73B: zweiter Entlüftungsventilanschluss für Zusatzsteuerrelaisleitung
- 73V: Entlüftungsanschluss
- 73W: Zweiter Steueranschluss
- 73X: erster Entlüftungsventilanschluss des Entlüftungsventils
- 73Y: zweiter Entlüftungsventilanschluss des Entlüftungsventils
- 73Z: Steueranschluss des Entlüftungsventils
- 74: Steuerventil
- 74A: Steuerdrucknehmeranschluss
- 74B: Steuerdruckgeberanschluss
- 74C: Entlüftungsanschluss des Steuerventils
- 75, 75A, 75B: Druckbegrenzer
- 76: Ventilfeder
- 77: Zweiganschluss
- 78: Haupt-Zweiganschluss
- 79: Absperrventil oder Drossel
- 82: Spule
- 83: Steuerleitung
- 90: Pneumatikanlage
- 91: Balg
- 92: Speicher
- 93: Magnetventil
- 94: Magnetventil
- 95: Galerie
- 96: weitere Pneumatikleitung
- 97: Ventilblock
- 98: Feder-Zweigleitung
- 99: Speicher-Zweigleitung
- 100: Druckluftversorgungssystem
- 110: Steuerleitung
- 120: Steuerrelaisleitung (Relaiskolbensteuerleitung)
- 130: Steuerrelaisentlüftungsleitung
- 140: Rückkoppelleitung
- 150: weitere Entlüftungsleitung
- 152: dritte Drossel
- 160, 160': Relaiskolben, Relaiskolbenfortsatz
- 160B, 160B': Zusatzentlüftungsleitung
- 160C, 160C', 160C": Zusatzdrossel, Zusatzdrossel in Entlüftungsventil 73, Zusatzdrossel als Stelldrossel
- 160D: Dichtung
- 160E: Aussparung
- 160F: Bohrung
- 160G: Schlitz
- 161: Erste Steuerfläche
- 162: Zweite Steuerfläche
- 163: Entlüftungsrückraum
- 164: Steuerkammer
- 170: weitere Entlüftungsleitung
- 173: Entlüftungsventilgehäuse

## Patentansprüche

1. Druckluftversorgungsanlage (10) zum Betreiben eines pneumatischen Systems, mit:
- einer Druckluftzuführung (1), einem Druckluftanschluss (2) zu einer Pneumatikanlage (90) und einem Entlüftungsanschluss (3) oder einem weiteren Entlüftungsanschluss (3A) zur Umgebung, wobei:
- zwischen der Druckluftzuführung (1) und dem Druckluftanschluss (2) eine Pneumatikhauptleitung (60);
- zwischen dem Druckluftanschluss (2) und dem Entlüftungsanschluss (3) eine Entlüftungsleitung (70) mit einem über einen ersten und einen zweiten Entlüftungsventilanschluss (73X, 73Y) angeschlossenen Entlüftungsventil (73) gebildet ist, wobei
- das Entlüftungsventil (73) zusätzlich einen Steueranschluss (73Z) aufweist, der mittels einer pneumatischen Steuerrelaisleitung (120) in pneumatischer Verbindung mit einem Steuerventil (74) verbunden ist, und
- das Entlüftungsventil (73)
- in einem ersten Schaltzustand des Entlüftungsventils (73) zwischen dem ersten Entlüftungsventilanschluss (73X) und dem zweiten Entlüftungsventilanschluss (73Y) zum Entlüftungsanschluss (3) geschlossen ist; und
- in einem zweiten Schaltzustand des Entlüftungsventils (73) zwischen dem ersten Entlüftungsventilanschluss (73X) und dem zweiten Entlüftungsventilanschluss (73Y) zum Entlüftungsanschluss (3) geöffnet ist, und
- das Steuerventil (74)
- in einem ersten Schaltzustand zwischen einem Steuerdrucknehmeranschluss (74A) und einem Steuerdruckgeberanschluss (74B) zum Steueranschluss (73Z) geschlossen ist; und
- in einem zweiten Schaltzustand zwischen dem Steuerdrucknehmeranschluss (74A) und dem Steuerdruckgeberanschluss (74B) zum Steueranschluss (73Z) geöffnet ist, um den Steueranschluss (73Z) des Entlüftungsventils (73) mit Druck zu beaufschlagen und das Entlüftungsventil (73) von dem ersten oder zweiten Schaltzustand des Entlüftungsventils (73) in den jeweils anderen Schaltzustand des Entlüftungsventils (73) zu überführen; und
- das Steuerventil (74) in Form eines 2/2-Wegeventils gebildet ist, **dadurch gekennzeichnet, dass**:
- die pneumatische Steuerrelaisleitung (120) mittels einer Zusatzentlüftungsleitung (160B) in dem ersten und/oder zweiten Schaltzustand des Entlüftungsventils (73) mit dem Entlüftungsanschluss (3) und/oder einen weiteren Entlüftungsanschluss (3A) verbunden ist, und wobei
- die Zusatzentlüftungsleitung (160B) mit einem Teilabschnitt der Entlüftungsleitung (70) zwischen dem zweiten Entlüftungsventilanschluss (73Y) und dem Entlüftungsanschluss (3) und/oder dem weiteren Entlüftungsanschluss (3A) pneumatisch verbunden ist.

2. Druckluftversorgungsanlage nach Anspruch 1, **dadurch gekennzeichnet, dass** in der Zusatzentlüftungsleitung (160B) eine Zusatzdrossel (160C) angeordnet ist.

3. Druckluftversorgungsanlage nach Anspruch 1, **dadurch gekennzeichnet, dass** die Zusatzdrossel (160C) einen Durchmesser von kleiner gleich 1 mm aufweist.

4. Druckluftversorgungsanlage nach einem der vorrangehenden Ansprüche, **dadurch gekennzeichnet, dass** die Zusatzentlüftungsleitung (160B) unabhängig vom Schaltzustand des Entlüftungsventils (73) mit dem Entlüftungsanschluss (3) und/oder dem weiteren Entlüftungsanschluss (3A) verbunden ist.

5. Druckluftversorgungsanlage nach zumindest einem der vorangehenden Ansprüche, **dadurch gekennzeichnet, dass** die pneumatische Steuerrelaisleitung (120) zwischen dem Steuerdruckgeberanschluss (74B) und dem Steueranschluss (73Z) als eine mit Steuerdruck beaufschlagbare pneumatische Steuerrelaisleitung (120) gebildet ist, insbesondere als eine Relaiskolbensteuerleitung für einen Relaiskolben (160) des Entlüftungsventiles (73).

6. Druckluftversorgungsanlage (10) nach Anspruch 5, **dadurch gekennzeichnet, dass** die Zusatzentlüftungsleitung (160B) als eine Aussparung (160E) im Relaiskolben (160) oder im Entlüftungsventilgehäuse (173) des Entlüftungsventiles (73) ausgebildet ist.

7. Druckluftversorgungsanlage (10) nach Anspruch 6, **dadurch gekennzeichnet, dass** die Aussparung (160E) als eine Bohrung (160F) in dem Relaiskolben (160) des Entlüftungsventiles (73) ausgebildet ist.

8. Druckluftversorgungsanlage (10) nach Anspruch 6 oder 7, **dadurch gekennzeichnet, dass** eine Dichtung (160D) vorgesehen ist, welche die Aussparung (160E) oder die Bohrung (160F) im ersten oder zweiten Schaltzustand des Entlüftungsventils (73) abdichtet und verschließt.

9. Druckluftversorgungsanlage (10) nach Anspruch 6, **dadurch gekennzeichnet, dass** die Aussparung (160E) als ein Schlitz (160G) in dem Entlüftungsventilgehäuse (173) des Entlüftungsventiles (73) gebildet ist, wobei der Schlitz (160G) insbesondere über einen Teilbereich des Ventilhubes des Relaiskolbens (160) des Entlüftungsventils (73) gebildet ist.

10. Druckluftversorgungsanlage nach zumindest einem der vorangehenden Ansprüche, **dadurch gekennzeichnet, dass** Steuerventil (74) als ein Magnetsteuerventil gebildet ist.

11. Druckluftversorgungsanlage nach Anspruch 10, **dadurch gekennzeichnet, dass** der erste Schaltzustand des Steuerventils (74) als Magnetsteuerventil ein unbestromter Schaltzustand und der zweite Schaltzustand ein bestromter Schaltzustand ist.

12. Druckluftversorgungsanlage nach einem der vorrangehenden Ansprüche, **dadurch gekennzeichnet, dass** die Zusatzentlüftungsleitung (160B) als eine Rückkoppel-Leitung (140) ausgebildet ist, wobei die Rückkoppel-Leitung (140) an die pneumatische Steuerrelaisleitung (120) und einen zweiten Steueranschluss (73W) des Entlüftungsventils (73) anschließt.

13. Druckluftversorgungsanlage nach Anspruch 12, **dadurch gekennzeichnet, dass** bei einem Entlüftungsanschluss (73V) des Entlüftungsventils (73), der mit dem zweiten Steueranschluss (73W) pneumatisch verbunden ist, eine noch weitere Entlüftungsleitung (150) anschließt, die mit dem Entlüftungsanschluss (3) und/oder dem weiteren Entlüftungsanschluss (3A) pneumatisch verbunden ist.

14. Druckluftversorgungsanlage nach Anspruch 12 oder 13, **dadurch gekennzeichnet, dass** der zweite Steueranschluss (73W) zur Aufnahme eines zweiten Steuerteildrucks ausgebildet ist, der zusätzlich zu einem ersten Steuerteildruck des ersten Steueranschlusses (73Z) wirkt.

15. Druckluftversorgungsanlage nach einem der Ansprüche 12 bis 14, **dadurch gekennzeichnet, dass** der zweite Steueranschluss (73W) als ein Gegensteueranschluss ausgebildet ist, der zur Aufnahme eines zweiten Steuerteildrucks ausgebildet ist, der zusätzlich zu einem ersten Steuerteildruck des ersten Steueranschlusses (73Z) und zeitlich begrenzt und entgegen gerichtet eines ersten Steuerteildrucks des ersten Steueranschlusses (73Z) wirkt.

16. Druckluftversorgungsanlage nach einem der Ansprüche 12 bis 15, **dadurch gekennzeichnet, dass** die Zusatzentlüftungsleitung (160B) als eine Rückkoppel-Leitung (140) mit einem Entlüftungsrückraum (163) des Entlüftungsventils (73) und dem Entlüftungsanschluss (3) und/oder dem weiteren Entlüftungsanschluss (3A) pneumatisch verbunden ist, wobei eine noch weitere Entlüftungsleitung (150) mit einem noch weiteren zweiten Entlüftungs-Zweiganschluss (56) an die Entlüftungsleitung 70 anschließt.

17. Druckluftversorgungsanlage nach einem der Ansprüche 12 bis 16, **dadurch gekennzeichnet, dass** das Entlüftungsventil (73) mittels einem mit Steuerdruck druckbeaufschlagbaren Relaiskolben (160, 160') gebildet ist, wobei der Steuerdruck von dem Steuerventil (74) schaltbar ist, und der Relaiskolben (160, 160') zur Schaltung des Entlüftungsventils (73) ausgebildet ist, insbesondere in einen geöffneten oder geschlossenen Zustand, insbesondere das Entlüftungsventil (73) als ein pneumatisch angesteuertes 2/2-Wegeventil gebildet ist, wobei
- der Relaiskolben (160, 160') eine einer Steuerkammer (164) zugewandte erste Steuerfläche (161), und eine einem Entlüftungsrückraum (163) zugewandte zweite Steuerfläche (162) hat, und wobei
- die erste und die zweite Steuerfläche (161, 162) zur gegeneinander gerichteten Aufnahme des ersten Steuerteildrucks und des zweiten Steuerteildrucks angeordnet sind, wobei der erste und zweite Steuerteildruck aus der Relaiskolbensteuerleitung (120) abgeleitet ist.

18. Druckluftversorgungsanlage nach einem der Ansprüche 12 bis 17, **dadurch gekennzeichnet, dass** am Entlüftungsrückraum (163), insbesondere bei einem Entlüftungsanschluss (73V) des Entlüftungsventils (73), eine noch weitere Entlüftungsleitung (150) anschließt, die mit einem noch weiteren zweiten Entlüftungs-Zweiganschluss (56) an die Entlüftungsleitung (70) anschließt zwischen Entlüftungsventil (73) und dem ersten Entlüftungs-Zweiganschluss (53).

19. Druckluftversorgungsanlage nach einem der der Ansprüche 12 bis 18, **dadurch gekennzeichnet, dass** die noch weitere Entlüftungsleitung (150) zur Entlüftung des Entlüftungsrückraums (163) des Entlüftungsventils (73) bei Betätigung des Relaiskolbens (160) ausgebildet ist und die noch weitere Entlüftungsleitung (150) hinsichtlich des Druckluftdurchlasses mittels einer dritten Drossel (152) gedrosselt ist, und/oder wobei aufgrund des dadurch definierten Druckluftdurchlasses aus dem Entlüftungsrückraum (163) auch eine Bewegung des Relaiskolbens (160) bei Betätigung gedämpft wird.

20. Druckluftversorgungssystem (100) mit einer Druckluftversorgungsanlage (10) nach zumindest einem der vorangehenden Ansprüche 1 bis 19 und mit einer Pneumatikanlage (90), insbesondere einer Luftfederanlage eines Fahrzeuges, vorzugsweise eines Personenkraftfahrzeuges, insbesondere aufweisend eine Galerie (95), die wenigstens eine an die Galerie (95) pneumatisch angeschlossene Zweigleitung (98, 99) mit einem Balg (91) und/oder einem Speicher (92) sowie einem dem Balg und/oder dem Speicher vorgeordnetem Wegeventil aufweist.

21. Verfahren zum Betreiben eines Druckluftversorgungssystems (100) nach Anspruch 20, **dadurch gekennzeichnet, dass** das Verfahren folgende Schritte umfasst:
- Belüften der Pneumatikanlage (90), wobei das 2/2-Wege-Steuerventil (74) in den ersten Schaltzustand geschaltet ist, der zwischen dem Steuerdrucknehmeranschluss (74A) und dem Steuerdruckgeberanschluss (74B) zum Steueranschluss geschlossen ist, um die Steuerrelaisleitung (120) von dem Druck in der Pneumatikhauptleitung (60) zu trennen; und
- Entlüften der Pneumatikanlage (90), wobei das 2/2-Wegeventil in den zweiten Schaltzustand geschaltet ist, der zwischen dem Steuerdrucknehmeranschluss (74A) und dem Steuerdruckgeberanschluss (74B) zum Steueranschluss (73Z) des Entlüftungsventils (73) geöffnet ist, um die Steuerrelaisleitung (120) mit Druck zu beaufschlagen,
- wobei die Steuerrelaisleitung (120) im ersten und/oder zweiten Schaltzustand des Steuerventils (74) über eine Zusatzentlüftungsleitung (160B) mit dem Entlüftungsanschluss (3) und/oder dem weiteren Entlüftungsanschluss (3A) in Verbindung steht, und wobei die Zusatzentlüftungsleitung (160B) mit einem Teilabschnitt der Entlüftungsleitung (70) zwischen dem zweiten Entlüftungsventilanschluss (73Y) und dem Entlüftungsanschluss (3) und/oder dem weiteren Entlüftungsanschluss (3A) pneumatisch verbunden ist.

22. Verfahren zum Betreiben eines Druckluftversorgungssystems (100) nach Anspruch 21, **dadurch gekennzeichnet, dass** die Verbindung der Zusatzentlüftungsleitung (160B) zum Entlüftungsanschluss (3) in dem zweiten Schaltzustand des Steuerventils (74) und/oder in dem zweiten Schaltzustand des Entlüftungsventils (73) mittels einer Dichtung (160D) gesperrt wird.

23. Fahrzeug, vorzugsweise ein Nutzfahrzeug, mit einem Druckluftversorgungssystem (100) nach Anspruch 20.

## Claims

1. Compressed air supply installation (10) for the operation of a pneumatic system comprising:
- a compressed air feed (1), a compressed air connection (2) to a pneumatic unit (90) and a venting connection (3) or a further venting connection (3a) to the surroundings, wherein:
- a main pneumatic line (60) is formed between the compressed air feed (1) and the compressed air connection (2);
- a venting line (70) having a venting valve (73) connected via a first and a second venting valve connection (73X, 73Y) is formed between the compressed air connection (2) and the venting connection (3), wherein
- the venting valve (73) additionally comprises a control connection (73Z), which is connected in pneumatic connection to a control valve (74) by means of a pneumatic control relay line (120), and
- the venting valve (73)
- in a first switching state of the venting valve (73) is closed between the first venting valve connection (73X) and the second venting valve connection (73Y) to the venting connection (3); and
- in a second switching state of the venting valve (73) is opened between the first venting valve connection (73X) and the second venting valve connection (73Y) to the venting connection (8), and
- the control valve (74)
- in a first switching state is closed between a control pressure input connection (74A) and a control pressure output connection (74B) to the control connection (73Z); and
- in a second switching state is opened between the control pressure input connection (74A) and the control pressure output connection (74B) to the control connection (73Z), in order to subject the control connection (73Z) of the venting valve (73) to pressure and to shift the venting valve (73) from the first or second switching state of the venting valve (73) into the other respective switching state of the venting valve (73); and
- the control valve (74) is embodied in the form of a 2/2-way directional control valve, **characterized in that**
- the pneumatic control relay line (120) is connected to the venting connection (3) and/or a further venting connection (3A) by means of an additional venting line (160B) in the first and/or second switching state of the venting valve (73), and wherein
- the additional venting line (160B) is pneumatically connected to a portion of the venting line (70) between the second venting valve connection (73Y) and the venting connection (3) and/or to the further venting connection (3A).

2. Compressed air supply installation according to Claim 1, **characterized in that** an additional restrictor (160C) is arranged in the additional venting line (160B).

3. Compressed air supply installation according to Claim 1, **characterized in that** the additional restrictor (160C) has a diameter of less than/equal to 1 mm.

4. Compressed air supply installation according to one of the preceding claims, **characterized in that** the additional venting line (160B) is connected to the venting connection (3) and/or to the further venting connection (3A) regardless of the switching state of the venting valve (73).

5. Compressed air supply installation according to at least one of the preceding Claims, **characterized in that** the pneumatic control relay line (120) between the control pressure output connection (74B) and the control connection (73Z) is embodied as a pneumatic control relay line (120) which can be subjected to a control pressure, in particular as a relay piston control line for a relay piston (160) of the venting valve (73).

6. Compressed air supply installation (10) according to Claim 5, **characterized in that** the additional venting line (160B) is formed as an opening (160E) in the relay piston (160) or in the venting valve housing (173) of the venting valve (73).

7. Compressed air supply installation (10) according to Claim 6, **characterized in that** the opening (160E) is formed as a bore (160F) in the relay piston (160) of the venting valve (73).

8. Compressed air supply installation (10) according to Claim 6 or 7, **characterized in that** a seal (160D) is provided, which seals off and closes the opening (160E) or the bore (160F) in the first or second switching state of the venting valve (73).

9. Compressed air supply installation (10) according to Claim 6, **characterized in that** the opening (160E) is formed as an aperture (160G) in the venting valve housing (173) of the venting valve (73), wherein the aperture (160G) is formed, in particular, over a partial range of the valve lift of the relay piston (160) of the venting valve (73).

10. Compressed air supply installation according to at least one of the preceding claims, **characterized in that** control valve (74) is embodied as a solenoid control valve.

11. Compressed air supply installation according to Claim 10, **characterized in that** the first switching state of the control valve (74) as solenoid control valve is an unenergized switching state and the second switching state is an energized switching state.

12. Compressed air supply installation according to one of the preceding claims, **characterized in that** the additional venting line (160B) is embodied as a feedback line (140), wherein the feedback line (140) connects to the pneumatic control relay line (120) and a second control connection (73W) of the venting valve (73).

13. Compressed air supply installation according to Claim 12, **characterized in that** in the case of a venting connection (73V) of the venting valve (73) which is pneumatically connected to the second control connection (73), yet a further venting line (15) is connected, which is pneumatically connected to the venting connection (3) and/or the further venting connection (3A).

14. Compressed air supply installation according to Claim 12 or 13, **characterized in that** the second control connection (73W) is designed for receiving a second control pressure fraction, which acts in addition to a first control pressure fraction of the first control connection (73Z).

15. Compressed air supply installation according to one of Claims 12 to 14, **characterized in that** the second control connection (73W) is embodied as a counter-control connection, which is designed to receive a second control pressure fraction, which acts in addition to a first control pressure fraction of the first control connection (73Z) and for a limited time and in the opposite direction to a first control pressure fraction of the first control connection (73Z).

16. Compressed air supply installation according to one of Claims 12 to 15, **characterized in that** the additional venting line (160B) is pneumatically connected as a feedback line (140) to a venting rear space (163) of the venting valve (73) and to the venting connection (3) and/or to the further venting connection (3A), wherein yet a further venting line (150) connects by yet a further second venting branch connection (56) to the venting line 70.

17. Compressed air supply installation according to one of Claims 12 to 16, **characterized in that** the venting valve (73) is formed by means of a relay piston (160, 160') which can be subjected to control pressure, wherein the control pressure can be controlled by the control valve (74), and the relay piston (160, 160') is designed for switching of the venting valve (73), particularly into an opened or closed state, the venting valve (73), in particular, being embodied as a pneumatically actuated 2/2-way directional control valve, wherein
- the relay piston (160, 160') has a first control face (161) facing a control chamber (164), and a second control face (162) facing a venting rear space (163), and wherein
- the first and the second control face (161, 162) are arranged for mutually opposed reception of the first control pressure fraction and of the second control pressure fraction, wherein the first and second control pressure fractions are derived from the relay piston control line (120).

18. Compressed air supply installation according to one of Claims 12 to 17, **characterized in that** yet a further venting line (150), which connects by yet a further second venting-branch connection (56) to the venting line (70) between the venting valve (73) and the first venting-branch connection (53), connects to the venting rear space (163), particularly in the case of a venting connection (73V) of the venting valve (73).

19. Compressed air supply installation according to one of Claims 12 to 18, **characterized in that** the yet further venting line (150) is designed for venting the venting rear space (163) of the venting valve (73) when the relay piston (160) is actuated, and the passage of compressed air through the yet further venting line (150) is restricted by means of a third restrictor, and/or wherein a movement of the relay piston (160) when actuated is also damped owing to the thereby defined passage of compressed air from the venting rear space (163).

20. Compressed air supply system (100) having a compressed air supply installation (10) according to at least one of the preceding Claims 1 to 19 and having a pneumatic unit (90), in particular an air suspension system of a vehicle, preferably an automobile, in particular comprising a gallery (95), which has at least one branch line (98, 99) pneumatically connected to the gallery (95) with a bellows (91) and/or a reservoir (92) together with a directional control valve connected upstream of the bellows and/or the reservoir.

21. Method for the operation of a compressed air supply system (100) according to Claim 20, **characterized in that** the method comprises the following steps:
- ventilation of the pneumatic unit (90), wherein the 2/2-way directional control valve (74) is switched into the first switching state, which is closed between the control pressure input connection (74A) and the control pressure output connection (74B) to the control connection, in order to isolate the control relay line (120) from the pressure in the main pneumatic line (60); and
- venting of the pneumatic unit (90), wherein the 2/2-way directional control valve is switched into the second switching state, which is opened between the control pressure input connection (74A) and the control pressure output connection (74B) to the control connection (73Z) of the venting valve (73), in order to subject the control relay line (120) to pressure,
- wherein the control relay line (120) in the first and/or second switching state of the control valve (74) is connected via an additional venting line (160B) to the venting connection (3) and/or to the further venting connection (3A), and wherein the additional venting line (160B) is pneumatically connected to a portion of the venting line (70) between the second venting valve connection (73Y) and the venting connection (3) and/or to the further venting connection (3A).

22. Method for the operation of a compressed air supply system (100) according to Claim 21, **characterized in that** the connection of the additional venting line (160B) to the venting connection (3) is closed in the second switching state of the control valve (74) and/or in the second switching state of the venting valve (73) by means of a seal (160D).

23. Vehicle, preferably a utility vehicle, having a compressed air supply system (100) according to Claim 20.

## Revendications

1. Installation d'alimentation en air comprimé (10) pour faire fonctionner un système pneumatique, comprenant :
- une alimentation en air comprimé (1), un raccord d'air comprimé (2) à une installation pneumatique (90) et un raccord de désaérage (3) ou un autre raccord de désaérage (3A) de l'environnement,
- une conduite principale pneumatique (60) étant formée entre l'alimentation en air comprimé (1) et le raccord d'air comprimé (2) ;
- une conduite de désaérage (70) avec une soupape de désaérage (73) raccordée par le biais d'un premier et un deuxième raccord de soupape de désaérage (73X, 73Y) étant formée entre le raccord d'air comprimé (2) et le raccord de désaérage (3),
- la soupape de désaérage (73) présentant en outre un raccord de commande (73Z), qui est connecté au moyen d'une conduite de relais de commande pneumatique (120) en liaison pneumatique avec une soupape de commande (74), et
- la soupape de désaérage (73)
- étant fermée vers le raccord de désaérage (3) dans un premier état de commutation de la soupape de désaérage (73) entre le premier raccord de soupape de désaérage (73X) et le deuxième raccord de soupape de désaérage (73Y) ; et
- étant ouverte vers le raccord de désaérage (3) dans un deuxième état de commutation de la soupape de désaérage (73) entre le premier raccord de soupape de désaérage (73X) et le deuxième raccord de soupape de désaérage (73Y), et
- la soupape de commande (74)
- étant fermée vers le raccord de commande (73Z) dans un premier état de commutation entre un raccord de récepteur de pression de commande (74A) et un raccord de générateur de pression de commande (74B) ; et
- étant ouverte vers le raccord de commande (73Z) dans un deuxième état de commutation entre le raccord de récepteur de pression de commande (74A) et le raccord le générateur de pression de commande (74B), afin de solliciter en pression le raccord de commande (73Z) de la soupape de désaérage (73) et de transférer la soupape de désaérage (73) depuis le premier ou le deuxième état de commutation de la soupape de désaérage (73) dans l'autre état de commutation respectif de la soupape de désaérage (73) ; et
- la soupape de commande (74) étant réalisée sous la forme d'une soupape à 2/2 voies, **caractérisée en ce que** :
- la conduite de relais de commande pneumatique (120) est connectée au moyen d'une conduite de désaérage supplémentaire (160B) dans le premier et/ou le deuxième état de commutation de la soupape de désaérage (73) au raccord de désaérage (3) et/ou à un autre raccord de désaérage (3A), et
- la conduite de désaérage supplémentaire (160B) est connectée pneumatiquement à une portion partielle de la conduite de désaérage (70) entre le deuxième raccord de soupape de désaérage (73Y) et le raccord de désaérage (3) et/ou le raccord de désaérage supplémentaire (3A).

2. Installation d'alimentation en air comprimé selon la revendication 1, **caractérisée en ce qu'**un étranglement supplémentaire (160C) est disposé dans la conduite de désaérage supplémentaire (160B).

3. Installation d'alimentation en air comprimé selon la revendication 1, **caractérisée en ce que** l'étranglement supplémentaire (160C) présente un diamètre inférieur ou égal à 1 mm.

4. Installation d'alimentation en air comprimé selon l'une quelconque des revendications précédentes, **caractérisée en ce que** la conduite de désaérage supplémentaire (160B) est connectée indépendamment de l'état de commutation de la soupape de désaérage (73) au raccord de désaérage (3) et/ou au raccord de désaérage supplémentaire (3A).

5. Installation d'alimentation en air comprimé selon au moins l'une quelconque des revendications précédentes, **caractérisée en ce que** la conduite de relais de commande pneumatique (120) entre le raccord générateur de pression de commande (74B) et le raccord de commande (73Z) est réalisée sous forme de conduite de relais de commande pneumatique (120) pouvant être sollicitée avec une pression de commande, en particulier sous forme d'une conduite de commande de piston de relais pour un piston de relais (160) de la soupape de désaérage (73).

6. Installation d'alimentation en air comprimé (10) selon la revendication 5, **caractérisée en ce que** la conduite de désaérage supplémentaire (160B) est réalisée sous forme d'un évidement (160E) dans le piston de relais (160) ou dans le boîtier de soupape de désaérage (173) de la soupape de désaérage (73).

7. Installation d'alimentation en air comprimé (10) selon la revendication 6, **caractérisée en ce que** l'évidement (160E) est réalisé sous forme d'alésage (160F) dans le piston de relais (160) de la soupape de désaérage (73).

8. Installation d'alimentation en air comprimé (10) selon la revendication 6 ou 7, **caractérisée en ce qu'**un joint d'étanchéité (160D) est prévu, lequel étanchéifie et ferme l'évidement (160E) ou l'alésage (160F) dans le premier ou le deuxième état de commutation de la soupape de désaérage (73).

9. Installation d'alimentation en air comprimé (10) selon la revendication 6, **caractérisée en ce que** l'évidement (160E) est réalisé sous la forme d'une fente (160G) dans le boîtier de soupape de désaérage (173) de la soupape de désaérage (73), la fente (160G) étant notamment formée sur une région partielle de la course de soupape du piston de relais (160) de la soupape de désaérage (73).

10. Installation d'alimentation en air comprimé selon au moins l'une quelconque des revendications précédentes, **caractérisée en ce que** la soupape de commande (74) est réalisée sous forme de soupape de commande magnétique.

11. Installation d'alimentation en air comprimé selon la revendication 10, **caractérisée en ce que** le premier état de commutation de la soupape de commande (74) en tant que soupape de commande magnétique est un état de commutation non alimenté en courant et le deuxième état de commande est un état de commande alimenté en courant.

12. Installation d'alimentation en air comprimé selon l'une quelconque des revendications précédentes, **caractérisée en ce que** la conduite de désaérage supplémentaire (160B) est réalisée sous forme de conduite de rétroaction (140), la conduite de rétroaction (140) se raccordant à la conduite de relais de commande pneumatique (120) et à un deuxième raccord de commande (73W) de la soupape de désaérage (73).

13. Installation d'alimentation en air comprimé selon la revendication 12, **caractérisée en ce que** dans le cas d'un raccord de désaérage (73V) de la soupape de désaérage (73) qui est connecté pneumatiquement au deuxième raccord de commande (73W), encore une conduite de désaérage supplémentaire (150) est raccordée, laquelle est connectée pneumatiquement au raccord de désaérage (3) et/ou au raccord de désaérage supplémentaire (3A).

14. Installation d'alimentation en air comprimé selon la revendication 12 ou 13, **caractérisée en ce que** le deuxième raccord de commande (73W) est réalisé pour recevoir une deuxième pression partielle de commande qui agit en plus d'une première pression partielle de commande du premier raccord de commande (73Z).

15. Installation d'alimentation en air comprimé selon l'une quelconque des revendications 12 à 14, **caractérisée en ce que** le deuxième raccord de commande (73W) est réalisé sous forme de raccord de commande conjuguée, qui est réalisée de manière à recevoir une deuxième pression partielle de commande qui agit en plus d'une première pression partielle de commande du premier raccord de commande (73Z), et de manière limitée dans le temps et dans un sens opposé à une première pression partielle de commande du premier raccord de commande (73Z).

16. Installation d'alimentation en air comprimé selon l'une quelconque des revendications 12 à 15, **caractérisée en ce que** la conduite de désaérage supplémentaire (160B), en tant que conduite de rétroaction (140), est connectée pneumatiquement à un espace arrière de désaérage (163) de la soupape de désaérage (73) et au raccord de désaérage (3) et/ou au raccord de désaérage supplémentaire (3A), encore une autre conduite de désaérage (150) se raccordant à encore un autre deuxième raccord de branchement de désaérage (56) au niveau de la conduite de désaérage (70).

17. Installation d'alimentation en air comprimé selon l'une quelconque des revendications 12 à 16, **caractérisée en ce que** la soupape de désaérage (73) est formée au moyen d'un piston de relais (160, 160') pouvant être sollicité en pression avec une pression de commande, la pression de commande pouvant être commutée par la soupape de commande (74), et le piston de relais (160, 160') étant réalisé pour commuter la soupape de désaérage (73), en particulier dans un état ouvert ou fermé, en particulier, la soupape de désaérage (73) étant réalisée sous forme de soupape à 2/2 voies à commande pneumatique,
- le piston de relais (160, 160') présentant une première surface de commande (161) tournée vers une chambre de commande (164), et une deuxième surface de commande (162) tournée vers un espace arrière de désaérage (163), et
- la première et la deuxième surface de commande (161, 162) étant disposées de manière à recevoir dans des sens opposés la première pression partielle de commande et la deuxième pression partielle de commande, la première et la deuxième pression partielle de commande étant dérivées de la conduite de commande de piston de relais (120).

18. Installation d'alimentation en air comprimé selon l'une quelconque des revendications 12 à 17, **caractérisée en ce qu'**encore une conduite de désaérage supplémentaire (150) se raccorde à l'espace arrière de désaérage (163), en particulier au niveau d'un raccord de désaérage (73V) de la soupape de désaérage (73), laquelle se raccorde à encore un autre deuxième raccord de branchement de désaérage (56) au niveau de la conduite de désaérage (70), entre la soupape de désaérage (73) et le premier raccord de branchement de désaérage (53).

19. Installation d'alimentation en air comprimé selon l'une quelconque des revendications 12 à 18, **caractérisée en ce que** la conduite de désaérage encore supplémentaire (150) est réalisée pour le désaérage de l'espace arrière de désaérage (163) de la soupape de désaérage (73) lors de l'actionnement du piston de relais (160) et la conduite de désaérage encore supplémentaire (150) étant étranglée au moyen d'un troisième étranglement (152) en rapport avec le passage d'air comprimé, et/ou du fait du passage d'air comprimé défini de ce fait hors de l'espace arrière de désaérage (163), un déplacement du piston de relais (160) lors de l'actionnement étant également amorti.

20. Système d'alimentation en air comprimé (100) comprenant une installation d'alimentation en air comprimé (10) selon au moins l'une quelconque des revendications précédentes 1 à 19 et comprenant une installation pneumatique (90), en particulier une installation de ressort pneumatique d'un véhicule, de préférence d'un véhicule automobile léger, en particulier présentant une galerie (95), qui présente au moins une conduite de branchement (98, 99) raccordée pneumatiquement à la galerie (95), avec un soufflet (91) et/ou un accumulateur (92) ainsi qu'une soupape de distribution montée en amont du soufflet et/ou de l'accumulateur.

21. Procédé pour faire fonctionner un système d'alimentation en air comprimé (100) selon la revendication 20, **caractérisé en ce que** le procédé comprend les étapes suivantes :
- ventilation de l'installation pneumatique (90), la soupape de commande à 2/2 voies (74) étant commutée dans le premier état de commutation qui est fermé vers le raccord de commande entre le raccord récepteur de pression de commande (74A) et le raccord générateur de pression de commande (74B) afin de séparer la conduite de relais de commande (120) de la pression dans la conduite principale pneumatique (60) ; et
- désaérage de l'installation pneumatique (90), la soupape à 2/2 voies étant commutée dans le deuxième état de commutation qui est ouvert vers le raccord de commande (73Z) de la soupape de désaérage (73) entre le raccord récepteur de pression de commande (74A) et le raccord générateur de pression de commande (74B), afin de solliciter en pression la conduite de relais de commande (120),
- la conduite de relais de commande (120), dans le premier et/ou le deuxième état de commutation de la soupape de commande (74), étant en liaison par le biais d'une conduite de désaérage supplémentaire (160B) avec le raccord de désaérage (3) et/ou le raccord de désaérage supplémentaire (3A), et la conduite de désaérage supplémentaire (160B) étant connectée à une portion partielle de la conduite de désaérage (70) entre le deuxième raccord de soupape de désaérage (73Y) et le raccord de désaérage (3) et/ou le raccord de désaérage supplémentaire (3A).

22. Procédé pour faire fonctionner un système d'alimentation en air comprimé (100) selon la revendication 21, **caractérisé en ce que** la connexion de la conduite de désaérage supplémentaire (160B) au raccord de désaérage (3) dans le deuxième état de commutation de la soupape de commande (74) et/ou dans le deuxième état de commutation de la soupape de désaérage (73) est bloquée au moyen d'un joint d'étanchéité (160D).

23. Véhicule, de préférence véhicule utilitaire, comprenant un système d'alimentation en air comprimé (100) selon la revendication 20.
